# EUROPÄISCHE PATENTSCHRIFT

(11) **EP 2 010 574 B1**
(45) Veröffentlichungstag und Bekanntmachung des Hinweises auf die Patenterteilung: **03.02.2016**
(21) Anmeldenummer: 07728579.9
(22) Anmeldetag: 26.04.2007
(51) Int. Cl.: C08B 37/00

(54) **HERSTELLUNG UND VERWENDUNG VON MODIFIZIERTEN POLYSACCHARID-CHITOSAN-VERBINDUNGEN UND VERFAHREN ZUR VERBESSERTEN DARSTELLUNG VON HES-ARZNEISTOFF VERBINDUNGEN**
MANUFACTURE AND USE OF MODIFIED POLYSACCHARIDE CHITOSAN COMPOUNDS AND A PROCESS TO IMPROVE THE PREPARATION OF HES-MEDICINAL SUBSTANCE COMPOUNDS
PRODUCTION ET UTILISATION DE COMPOSÉS DE POLYSACCHARIDE-CHITOSAN MODIFIES ET PROCÉDÉ DE PRÉSENTATION AMÉLIORÉE DE COMPOSES DE MÉDICAMENTS HES

(30) Priorität: 26.04.2006 DE 102006020035
(43) Veröffentlichungstag der Anmeldung: 07.01.2009
(73) Patentinhaber: B. Braun Melsungen AG, 34212 Melsungen (DE)
(72) Erfinder: MEIER, Bernd Horst, 64285 Darmstadt (DE); MEIER, Nele, 64285 Darmstadt (DE)
(74) Vertreter: von Kreisler Selting Werner - Partnerschaft von Patentanwälten und Rechtsanwälten mbB
(86) Internationale Anmeldenummer: PCT/EP2007/054124
(87) Internationale Veröffentlichungsnummer: WO 2007/122269

(56) Entgegenhaltungen:
- EP-A1- 0 934 771
- EP-A1- 1 152 013
- EP-A2- 0 051 354
- WO-A-79/00603
- WO-A-94/16750
- WO-A-96/02259
- WO-A-96/02260
- WO-A-2005/075501
- DE-A1- 3 102 574
- JP-A- 2 145 602
- US-A- 4 632 762
- ROBERTS G A F ET AL: "THE COUPLING OF CHITOSAN TO PREFORMED POLYMER BEADS" MAKROMOLEKULARE CHEMIE, RAPID COMMUNICATIONS, HUTHIG UND WEPF VERLAG. BASEL, CH, Bd. 10, Nr. 7, 1. Juli 1989 (1989-07-01), Seiten 339-343, XP000074704
- PARADOSSI G ET AL: "H NMR RELAXATION STUDY OF A CHITOSAN-CYCLODEXTRIN NETWORK" CARBOHYDRATE RESEARCH, ELSEVIER SCIENTIFIC PUBLISHING COMPANY. AMSTERDAM, NL, Bd. 300, Nr. 1, 9. Mai 1997 (1997-05-09), Seiten 77-84, XP000687262 ISSN: 0008-6215
- YALPANI M ET AL: "Some chemical and analytical aspects of polysaccharide modifications. 3. Formation of branched-chain, soluble chitosan derivatives" MACROMOLECULES, ACS, WASHINGTON, DC, US, Bd. 17, 1984, Seiten 272-281, XP002206891 ISSN: 0024-9297
- PARK Y K ET AL: "Galactosylated chitosan-graft-dextran as hepatocyte-targeting DNA carrier" JOURNAL OF CONTROLLED RELEASE, ELSEVIER, AMSTERDAM, NL, Bd. 69, Nr. 1, 3. Oktober 2000 (2000-10-03), Seiten 97-108, XP004217537 ISSN: 0168-3659

## Beschreibung

Die Erfindung betrifft ein Verknüpfungsprodukt, das als Träger für Arzneistoffe geeignet ist, sowie die davon abgeleitete Verbindung, die Arzneistoffe trägt. Die Erfindung betrifft ferner ein Verfahren sowie eine Vorrichtung zur Herstellung dieser Verknüpfungsprodukte und Verbindungen. Weiterhin betrifft die Erfindung eine pharmazeutische Zusammensetzung, enthaltend diese Verknüpfungsprodukte und Verbindungen sowie ihre Verwendung zur Herstellung eines infundierbaren Arzneimittels zur Behandlung einer Krankheit.

### Technischer Hintergrund

EP-A-1230935 beschreibt die Einführung von Arzneistoffmolekülen in Polysaccharide, welche im Hinblick auf die Häufigkeit der pro Polysaccharidmolekül gebundenen Arzneistoffmoleküle und die Einbindungsorte dieser Moleküle jedoch uneinheitlich erfolgt. So kann beobachtet werden, dass an einzelne Polysaccharidmoleküle eine Vielzahl kleinerer Arzneistoffmoleküle gebunden werden, während andere weitgehend unbesetzt bleiben. Dadurch wird zum einen die Ausbeute an gewünschten Kopplungsprodukten erheblich vermindert, andererseits ist es sehr aufwendig, die gewünschten Kopplungsprodukte, d. h. die Polysaccharidverbindungen mit der gewünschten Anzahl von eingeführten Molekülen, von unerwünschten Kopplungsprodukten zu trennen. Werden Kopplungsreaktionen durchgeführt, bei denen die Arzneistoffe durch Linkermoleküle in das Stärkemolekül eingebunden werden sollen, kann es zu unerwünschten Quervernetzungen der Polysaccharide selbst kommen.

Eine Vermeidung solcher Quervernetzungen ist für den speziellen Fall möglich, dass genau ein Molekül der arzneilich wirksamen Substanz mit je einem Polysaccharidmolekül verbunden werden soll. Hier besteht die Möglichkeit, diesen Arzneistoff an die terminale Aldehydgruppe des terminalen Glucosemonomers der Stärke zu binden, wie in DE 102 09 822 A1 beschrieben.

Bei der Einbindung mehrerer Arzneistoffe über polyvalente Linkermoleküle geht die regioselektive Steuerbarkeit der Einbindung bzw. Substitution jedoch verloren. Eine entsprechende Verbindung von Arzneistoffen mit Hydroxyethylstärke (HES) im Sinne einer HESylierung von Wirkstoffen, also der chemischen Kopplung verschiedener HES-Varianten an Arzneimittel, wird in DE 101 12 825 A1 offenbart, wobei der Ablauf der Reaktion in einer wässrigen Lösung beschrieben wird.

Bei den genannten Verfahren wird entweder ein arzneilich wirksames Molekül an genau eine terminale Aldehydgruppe oder eine unbekannte Zahl arzneilich wirksamer Moleküle über Linker unspezifisch mit der Hydroxyethylstärke kovalent verbunden.

Bei Hydroxyethylstärke, wie auch bei der überwiegenden Zahl der Arzneistoffe, stehen für die Einbindung in erster Linie Hydroxylgruppen zur Verfügung. Als Linker können bifunktionelle Carbonsäuren verwendet werden. Es ist bekannt, dass Dicarbonsäurechloride als Vernetzungsmittel für Polysaccharide wirken. Bei Veresterung mit Dicarbonsäurechloriden, beispielsweise Malonsäuredichlorid, findet neben der gewünschten Einbindung des Arzneimittelwirkstoffs in das Polysaccharid durch eine Esterbindung auch eine ausgeprägte Vernetzung der Polysaccharide untereinander statt.

Durch Knüpfung von Arzneistoffen an die Hydroxyethylstärke können diese Arzneistoffe hydrophilisiert werden. Die erhaltene Arzneistoff-HES-Verbindung ist darüber hinaus - wie die Hydroxyethylstärke selbst - kolloidosmotisch wirksam.

Für die Steuerung und spezielle Beeinflussung der Wirkung gebundener Arzneistoffe sind jedoch weitere nutzbare physikalisch-chemische Wirkprinzipien erwünscht.

Bislang konnten diese Wirkprinzipien nur bei Verwendung von komplexen Eiweißkörpern, zum Beispiel Humanalbumin oder biologisch weitgehend inerten Polymerverbindungen, bereitgestellt werden.

EP 1152013 offenbart die Umsetzung eines Chitosanderivates mit Heparin enthaltend eine Aldehydgruppe in Gegenwart von Natriumxyanoborhydrid. Anschließend erfolgt Komplexierung mit Toluidinblau.

Roberts et al.: "The Coupling of Chitosan to Preformed Polymer Beads" Makromolekulare Chemie, Rapid Communications, Huthing und Wepf Verlag, Basel, CH, Bd. 10, Nr. 7, 1. Juli 1989, Seiten 339-343, offenbart die Kupplung von Carboxymethyldextran und Chitosan mittels Amidbindung.

Paradossi et al.: "H NMR Relaxation Study of a Chitosan-Cyclodextrin Network" Carbohydrate Research, Elsevier Scientific Publishing Company, Amsterdam, NL, Bd. 300, Nr. 1, 9. Mai 1997, Seiten 77-84, offenbart die Umsetzung von Chitosan mit einem oxidierten Cyclodextrin, gefolgt von der Zugabe von Natriumcyanoborohydrid.

Die Beispiele 3, 4, 6 von WO 96/02259 offenbaren die Umsetzung von Chitosan mit Heparin in der Gegenwart von Natriumcyanoborhydrid.

Das Beispiel der EP 51354 offenbart die Umsetzung von Chitosan mit Heparin und NaCNBH₃ oder NaBH₄.

Die Verbindung 21 in Yalpani et al.: "Some chemical and analytical aspects of polysaccharide modifications. 3. Formation of branched-chain, soluble chitosan derivatives" Macromolecules, ACS, Washington, DC, US, Bd. 17, 1984, Seiten 272-281, offenbart das Verknüpfungsprodukt von Dextran und Chitosan.

Die Beispiele 5 bis 7 der WO 94/16750 offenbaren die Umsetzung von Chitosan mit einem Chitosan, einer Amylose oder Hyaluronsäure mit Aldehydgruppen, gefolgt von der Behandlung mit Natriumcyanoborhydrid. Das Beispiel 9 offenbart die nachfolgende Reaktion mit einem Linker und einer biologisch aktiven Substanz.

WO 2005/075501 offenbart die Umsetzung von Chitosan mit einem Cyclodextrin mit einer Aldehydgruppe und NaCNBH₃.

Die Zusammenfassung der JP 02-145602 offenbart die Umsetzung von Chitosan mit Hydroxyethylcellulose, gefolgt von einer Reduktion.

Das Beispiel 1 der WO 96/02260 offenbart die Umsetzung von oxidierter, vernetzter Stärke mit Chitosan in der Gegenwart von NaCNBH₃, gefolgt von Heparin.

Park et al: "Galactosylated chitosan-graft dextran as hepatocyte-targeting DANN carrier" Journal of Controlled Release, Elsevier, Amsterdam, NL, Bd. 69, Nr. 1, 3. Oktover 2000, Seiten 97-108 offenbart eine Verbindung enthaltend Chitosan und Dextran. Die Verknüpfung ist eine Amingruppe.

Dementsprechend lag der Erfindung die Aufgabe zugrunde, eine Verbindung, die als Träger für Arzneistoffe geeignet ist, und eine davon abgeleitete Verbindung, die Arzneistoffe trägt, zur Verfügung zu stellen, wobei die Verbindungen darüber hinaus eine gute Wasserlöslichkeit, ein spezifisches Ladungsmuster mit sowohl positiven als auch negativen Ladungen (Dipol), eine geringe allergene Wirkung und eine vollständige Abbaubarkeit aufweisen.

Die der Erfindung zugrunde liegende Aufgabe wurde gelöst durch den Gegenstand der Ansprüche.

### Kurzbeschreibung der Figuren

Figur 1 zeigt eine Draufsicht einer beispielhaften Ausführungsform der beschriebenen Vorrichtung.
Figur 2 zeigt einen Querschnitt der gleichen Ausführungsform.
Figur 3 zeigt einen mit der beschriebenen Vorrichtung hergestellten Chitosanfilm.
Figur 4 zeigt den Chitosanfilm nach Durchführung des erfindungsgemäßen Verfahrens.

### Beschreibung der Erfindung

Die Erfindung betrifft das in den Ansprüchen beschriebene Verknüpfungsprodukt (I). Erfindungsgemäß können Arzneistoffe, d. h. pharmazeutisch wirksame Verbindungen, kovalent an das Verknüpfungsprodukt (I) gebunden sein. Alternativ können Arzneistoffe durch Komplexbildung an das Verknüpfungsprodukt (I) angelagert sein.

Das Verknüpfungsprodukt (I) beschreibt somit an Chitosan oder Chitin gebundene Polysaccharidverbindungen, die als Träger zur regioselektiven Substitution des an Chitosan bzw. Chitin gebundenen Kolloids verwendet werden können.

Erfindungsgemäß bedeutet Chitin ein lineares Polysaccharid, das aus (1→4)-verknüpften 2-Acetamido-2-desoxy-β-D-glucopyranose-Resten aufgebaut ist, wobei weniger als 40 % der Acetamidgruppen zu Amingruppen deacetyliert sind. Chitosan ist das vollständig oder teilweise deacetylierte, wasserlösliche Derivat von Chitin, besteht also aus (1→4)-verknüpften 2-Acetamido-2-desoxy-β-D-glucopyranose- und 2-Amino-2-desoxy-β-D-glucopyranose-Resten. Bevorzugt ist ein Deacetylierungsgrad im Chitosan zwischen 90 % und 40 %, bevorzugter von 75 % bis 60 %.

Chitosan mit einem niedrigen Deacetylierungsgrad, das also nur einen niedrigen Anteil an freien Amingruppen aufweist, ist für eine Vereinzelung der Moleküle des Polysaccharids X an einem Chitosanmolekül besonders geeignet, da die Abstände zwischen den einzelnen an Chitosan A gebundenen Molekülen des Polysaccharids X so vorteilhaft vergrößert sind.

Das Polysaccharid A umfasst gemäß der Erfindung wenigstens 10 Monomereinheiten, bevorzugt wenigstens 35, am meisten bevorzugt wenigstens 50 Monomereinheiten, d. h. wenigstens 50 N-Acetylglucosamin- und/oder Glucosamineinheiten.

Die N-Acetylglucosamin- und/oder Glucosamin-Einheiten des Polysaccharids A können optional chemisch modifiziert sein. Eine vorteilhafte Modifizierung schließt die Methylcarboxylierung zum N,O-Carboxymethylchitosan ein. Eine ebenfalls vorteilhafte Modifikation ist das Chitosanhydrochlorid.

Das gebundene Polysaccharid X ist teilweise oder vollständig substituiert.

Das Polysaccharid X ausgewählt aus der Gruppe bestehend aus Stärken, Amylosen und/oder Amylopektine.

Die glykosidisch verknüpften Glucosemoleküle können an den Positionen 2, 3 und 6 substituiert sein, wobei eine Substitution an den Atomen C-2 und C-6 bevorzugt ist. Bevorzugt ist das molare Verhältnis der Substituenten an X zu X maximal 10.000.

Die molare Substitution MS ist definiert als Verhältnis der Gesamtzahl der Substituenten zur Gesamtzahl der Monomereinheiten. Eine molare Substitution im Bereich von 0,3 bis 0,85 oder kleiner als 0,3 ist bevorzugt. Weiter bevorzugt ist eine molare Substitution im Bereich von 0,4 bis 0,7 und noch bevorzugter im Bereich von 0,5 bis 0,6.

Der Substitutionsgrad DS ist definiert als Verhältnis der Gesamtzahl der substituierten Monomereinheiten zur Gesamtzahl der Monomereinheiten. Ein Substitutionsgrad im Bereich von 0,3 bis 0,75 oder kleiner als 0,3 ist bevorzugt. Weiter bevorzugt ist eine molare Substitution im Bereich von 0,4 bis 0,65 und noch bevorzugter im Bereich von 0,5 bis 0,55, wobei der Substitutionsgrad maximal den Wert der molaren Substitution annimmt.

Teilweise substituiert bedeutet, dass das Polysaccharid einen Substitutionsgrad DS von wenigstens 0,02 aufweist. Das Polysaccharid gilt als vollständig substituiert, wenn die molare Substitution MS größer als 0,97 ist.

Das C2/C6-Substitutionsverhältnis ist definiert als Verhältnis der Gesamtzahl der an der C2-Position der Glucoseeinheit gekoppelten Substituenten zu der Gesamtzahl der an der C6-Position der Glucoseeinheit gekoppelten Substituenten. Bevorzugt liegt das C2/C6-Substitutionsverhältnis im Bereich von 3 bis 12, besonders bevorzugt im Bereich von 4 bis 6.

Das Polysaccharid X ist, wie andere synthetische Kolloide, keine einheitliche Substanz mit einheitlichem Molekulargewicht. Stattdessen liegt immer ein polydisperses Gemisch unterschiedlich großer Moleküle vor, das beispielsweise über seine Molmassenverteilung definiert werden kann. Breite und Lage des Maximums der Molmassenverteilung können durch die im Stand der Technik üblichen Herstellungs- und Reinigungsverfahren beeinflusst werden.

Das mittlere Molekulargewicht Mw wird definiert als Verhältnis des Gesamtmolekulargewichts zu der Gesamtteilchenzahl. Das Zahlenmittel bzw. Median der Molmassenverteilung Mn kann über Osmometrie direkt bestimmt werden. Mn gibt den Wert an, bei dem 50 % der Teilchen eine höhere und 50 % der Teilchen eine geringere Molmasse aufweisen.

Das Mw der Bodenfraktion, d. h. das Mw für die 10 % der kleinsten Moleküle des Polysaccharids X, beträgt bevorzugt mehr als 20.000, bevorzugter mehr als 15.000 und ebenfalls bevorzugt zwischen 9.000, besonders bevorzugt mehr als 6.500.

Das Mw der Spitzenfraktion, d. h. das Mw für die 10 % der größten Moleküle des Polysaccharids X, beträgt bevorzugt weniger als 2.160.000, bevorzugter weniger als 1.000.000, ebenfalls bevorzugt weniger als 550.000 und besonders bevorzugt weniger als 150.000.

Bevorzugt weist das Polysaccharid X ein mittleres Molekulargewicht Mw von 10 kDa bis 500 kDa auf. In einer Ausgestaltung der Erfindung beträgt das Mw des Polysaccharids X 150 kDa bis 350 kDa. In einer weiteren Ausgestaltung hat das Polysaccharid X ein Mw von 200 kDa.

Besonders bevorzugt ist eine Hydroxyethylstärke als Polysaccharid X mit einem Molekulargewicht unterhalb von 30.000 und einem Substitutionsgrad DS von kleiner oder gleich 0,3, bei der m bevorzugt zwischen 15 und 50 liegt. Weiterhin bevorzugt ist eine Hydroxyethylstärke als Polysaccharid X mit einem Molekulargewicht unterhalb von 4.000, bei der m bevorzugt zwischen 100 und 200 liegt. Weiterhin bevorzugt ist eine Hydroxyethylstärke als Polysaccharid X mit einem Molekulargewicht von weniger als 1500, bei der m bevorzugt zwischen 300 und 750 liegt.

Der Polydispersitätsquotient Mw/Mn des Polysaccharids X ist in einer Ausgestaltung kleiner als 9,5, bevorzugt kleiner als 5,3, besonders bevorzugt kleiner als 2,4.

Die Substituenten des Polysaccharids X sind ausgewählt aus der Gruppe bestehend aus Hydroxyethylgruppen und Carboxymethylgruppen. In einer Ausführungsform können die Hydroxylgruppen der hydroxyethylsubstituierten Polysaccharide über Linkergruppen quervernetzt sein, zum Beispiel über Z1 und Z2, wie unten beschrieben, deren Ausgangsverbindungen bevorzugt Carboxyl-, Isocyanat-, Carbonsäurehalogenid-, Carboxylalkylen- und/oder Ester-Gruppen als funktionelle Gruppen tragen.

In einer weiteren Ausführungsform kommt als Polysaccharid X eine (formal) mit Mono- bzw. Dicarbonsäuren veresterte Stärke, beispielsweise Acetylstärke oder Propionylstärke, zur Anwendung. Gemäß einer weiteren Ausgestaltung können Carbonsäuren über Etherbindungen in das Polysaccharid X eingebunden sein. Bevorzugt sind Carboxylstärken der Gruppe bestehend aus Carboxymethylstärke, Carboxyethylstärke, Carboxypropylstärke. Geeignete Monocarbonsäuren sind beispielsweise Essigsäure, Propansäure, Benzoesäure, Buttersäure, Acrylsäure, Salicylsäure, Valeriansäure, Isovaleriansäure, Arginin, Lysin und Histidin sowie deren C1-C10-Alkylester, Halogenide, und Anhydride. Geeignete Dicarbonsäuren sind beispielsweise Adipinsäure, Pimelinsäure, Azelainsäure, Sebacinsäure, Sorbinsäure, Phthalsäure, Terephthalsäure, Isophthalsäure, Agaricinsäure, Zitronensäure, Oxalsäure, Bernsteinsäure, Fumarsäure, Maleinsäure, Glutarsäure, Malonsäure, Weinsäure, Äpfelsäure, Glutaminsäure, Asparaginsäure, Asparagin und Glutamin sowie deren C1-C10-Alkylester, Halogenide, und Anhydride. Bevorzugt ist Malonsäuredichlorid.

Das Polysaccharid X ist ausgewählt aus der Gruppe bestehend aus Stärke, Amylose und/oder Amylopektin, besonders bevorzugt Hydroxyethylstärke (HES).

In einer Ausgestaltung der Erfindung ist das Polysaccharid X HES 200/0,5. Bei HES x/y handelt es sich um eine Hydroxyethylstärke mit einem mittleren Molekulargewicht Mw von x kDa, die eine molare Substitution MS von y aufweist, das heißt, HES 200/0,5 weist ein mittleres Molekulargewicht Mw von 200 kDa und eine molare Substitution MS von 0,5 auf.

Da Chitin und Chitosan selbst wasserunlöslich ist, dient die Bindung hydrophiler Polysaccharide X an das an sich hydrophobe polymere Chitin bzw. Chitosan A unter Bildung des erfindungsgemäßen Verknüpfungsprodukts (I) der Hydrophilisierung. Dabei wird die Polarität des Moleküls signifikant erhöht. Die Wasserlöslichkeit des Chitins kann neben der Hydrophilisierung durch Einbau von Hydroxyethylstärken auch durch Deacetylierung, also durch Umwandlung des Chitins in Chitosan, entscheidend verbessert werden. Durch alkalische Deacetylierung des Chitins entsteht Chitosan, welches sich bei einem pH-Wert unter 6,5 in organischen Lösungsmitteln löst.

Es ist bekannt, dass Chitosan aus Chitin durch Verseifung der an den Aminogruppen gebundenen Acetamidgruppen hergestellt werden kann. Die Reaktion wird beispielsweise unter vorsichtigem Erhitzen von suspendiertem Chitin in 0,5 N NaOH durchgeführt. Durch die Temperaturführung der Reaktion kann das Ausmaß dieser Verseifung gut gesteuert werden. Beispielsweise wird in 2 N Essigsäure suspendiertes Chitin unter Inertgasatmosphäre mit 0,5 N NaOH versetzt und erhitzt. Der Anteil der freien Aminogruppen des Chitosans kann mit Hilfe der Van-Slyke-Reaktion überprüft werden.

Chitin- und Chitosanverbindungen haben den Vorteil, vollständig biologisch abbaubar zu sein. Die Verbindungen werden durch die Chitinase, Lysozym und anderen lysosomalen Enzymen abgebaut. Die biokompatiblen und enzymatisch abbaubaren Chitin- und Chitosanverbindungen werden durch die erfindungsgemäße Modifikation mit Polysacchariden, die optional substituiert sind, zur Verwendung als Infusionsstoff für eine Vielzahl von Indikationen vorteilhaft verbessert. Dabei spielt m, also das molare Verhältnis von X zu A, eine entscheidende Rolle.

Es ist bekannt, dass Chitosan komplexbildende Eigenschaften besitzt und beispielsweise mit Übergangsmetallen, wie Kupfer, Zink und Cadmium, selektiv Komplexe bildet. Zusätzlich hat Chitosan die Eigenschaft, Endotoxine, Nucleinsäuren und Nanopartikel zu adsorbieren. Die Fähigkeit des Chitosans Partikel und Farbstoffe zu adsorbieren, findet bereits in der kosmetischen Industrie und Abwassertechnik breite Verwendung. Einer Nutzung dieser Eigenschaften im Körper des Menschen stehen die Lösungseigenschaften des Chitosans entgegen. Chitosan wird vorteilhaft bei niedrigem pH, kleiner 6,5, in Anwesenheit organischer Säuren gelöst, da die Polymerverbindung unter diesen Bedingungen als lösliches Polykation vorliegt. Das erfindungsgemäße Verknüpfungsprodukt (I) stellt eine Möglichkeit zur Adhäsion an Partikel, Giftstoffe, Mikroorganismen und Viren dar. Nach der Adhäsion wird das Verknüpfungsprodukt (I) durch die Zellen des retikulohistiozytären Systems phagozytiert, wodurch die adsorbierten Stoffe aus dem Körper eliminiert werden können.

In einer Ausführungsform der Erfindung ist ein Arzneistoff R3 koordinativ an das Verknüpfungsprodukt (I) gebunden (komplexiert). R3 ist bevorzugt ein Metallion. Besonders bevorzugt ist R3 Eisen, vorzugsweise Fe^{II}, Kalium, Magnesium, Zink, Calcium, Gadolinium und/oder Kupfer.

Das komplexierende Verknüpfungsprodukt (I) kann erfindungsgemäß so gewählt werden, dass der Komplex R3 im Körper freisetzen und ihm R3 als Spurenelement und/oder wichtiges Mineral zuführen kann. In einer anderen Ausführungsform wird das komplexierende Verknüpfungsprodukt (I) so gewählt, dass der Komplex R3 im Körper nicht freisetzen kann, um beispielsweise die Anwendung des Komplex als Kontrastmittel, vorzugsweise mit R3 = Gadolinium, zu ermöglichen.

Nicht nur die erfindungsgemäßen Verknüpfungsprodukte (I), die Polysaccharide X auf der Basis von Glucoseeinheiten und deren Modifikationen, aufweisen, wie Hydroxyethylstärke, Carboxyethylstärke und Dextrane, sondern vor allem auch die Verknüpfungsprodukte (I), die Polysaccharide X auf der Basis von Galactose und Mannose und deren Modifikationen aufweisen, sind zur Einbringung in den menschlichen Körper und parenteralen Applikation gut geeignet.

Eine vorteilhaft als Polysaccharid X einzusetzende Hydroxyethylstärke weist ein MW < 130.000 und einen DS zwischen 0,3 und 0,7 auf. Das C2/C6-Verhältnis der als Polysaccharid X einzusetzenden Hydroxyethylstärke liegt vorteilhaft zwischen 4 und 6. Wenn das Verknüpfungsprodukt (I) zur Adsorption an Antigene bzw. deren Opsonierung eingesetzt wird, kommen als Polysaccharid X Hydroxyethylstärken mit einem Molekulargewicht < 60.000 Dalton, besonders vorteilhaft 1500 bis 10.000 Dalton zur Anwendung. Im Gegenzug sollte die Anzahl m der in das Polysaccharid A eingebrachten Polysaccharideinheiten X hinreichend groß sein, um eine entsprechende Hydrophilisierung der Verbindung zu gewährleisten. Die Größe der Zahl m hängt im Wesentlichen von der Größe des Polysaccharids A und der Anzahl seiner freien Aminogruppen ab. Die Polysaccharide X werden nach Aufnahme in den Makrophagen schnell lysosomal hydrolysiert und renal ausgeschieden, also nicht gespeichert. Das bekannte Enzyminventar makrozytärer Lysosomen kann die Amin- und/oder Amidbindung zwischen A und X in Abhängigkeit von der Beschaffenheit A und X einerseits und der Größe von m andererseits hydrolysieren. Die freigesetzten Hydroxyethylstärkemoleküle liegen dann deutlich unter der Ausschlussgrenze der Nieren (60.000 Dalton).

Die erfindungsgemäßen Verknüpfungsprodukte (I) können in Abhängigkeit ihrer berechenbaren und messbaren physikochemischen Eigenschaften als infundierbarer Arzneistoff mit den Indikationen als Virostatikum, Antibiotikum, insbesondere Antimykotikum, als Ionenaustauscher, Adsorptionsmedium von geladenen Partikeln und Molekülen sowie als kolloidales Blutersatzmittel und Antikoagulans verwendet werden. Wichtige physikochemischen Eigenschaften sind die Viskosität, die dynamische Viskosität, der kolloidosmotische Druck, die elektrische Leitfähigkeit, die elektrische Impedanz, thermische Stabilität und Autoklavierbarkeit der Lösungen sowie die optische Transmission, Extinktion, Verhalten bei der Durchführung einer Elektrophorese, Adsorptionsfähigkeit und Wasserbindungsfähigkeit. Die Lösung eines erfindungsgemäßen Verknüpfungsprodukts (I) ist bevorzugt thermisch stabil und autoklavierbar. Die erfindungsgemäßen Verknüpfungsprodukte (I) weisen zur Adsorption bevorzugt eine hinreichende Bindungskapazität für die zu adsorbierende Substanz auf. Die Adsorptionsfähigkeit für geladene Partikel kann auch durch Elektrophorese abgeschätzt werden.

Erfindungsgemäß kann das Verknüpfungsprodukt (I) substituiert sein, indem Reste der Formel (II) kovalent an X gebunden sind

-Z1_{c}R1 (II)

und/oder indem Reste der Formel (III) kovalent an A gebunden sind

-Z2_{d}R2 (III),

wobei R1 ein pharmazeutisch wirksamer Molekülrest ist, R2 ein pharmazeutisch wirksamer Molekülrest ist, und R1 und R2 gleich oder verschieden sein können, und wobei Z1 ein Linker ist, der sowohl an R1 als auch an X kovalent gebunden ist, Z2 ein Linker ist, der sowohl an R2 als auch an A kovalent gebunden ist, c = 1 oder 0 ist, d = 1 oder 0 ist, und wobei das molare Verhältnis des Restes der Formel (II) zu X a ist, das molare Verhältnis des Restes der Formel (III) zu A b ist, a eine ganze Zahl von 0 bis 1000, b eine ganze Zahl zwischen 0 und 1000 ist, und wenigstens a oder b von Null verschieden ist.

Bevorzugt ist a 1, 2, 3, 4 oder eine ganze Zahl bis 150, 350 oder 750. Bevorzugt ist b 1, 2, 3, 4 oder eine ganze Zahl bis 150, 350 oder 750.

Als pharmazeutisch wirksame Moleküle R, die als R1 und/oder R2 an das Verknüpfungsprodukt (I) gebunden werden sollen, kommen alle Substanzen in Frage, die kovalent an das erfindungsgemäße Verknüpfungsprodukt (I) gebunden werden können, also eine funktionelle Gruppe aufweisen, die mit einer komplementären funktionellen Gruppe von X und/oder von A reagieren kann, je nach funktioneller Gruppe beispielsweise unter Bildung eines Carbonsäureesters, Carbonsäureamids und/oder Urethans. Pharmazeutisch wirksame Moleküle, die in der Lage sind, mit dem Verknüpfungsprodukt (I) Carbonsäureester zu bilden, sind bevorzugt. Besonders bevorzugt sind R1 und/oder R2 aus der Gruppe ausgewählt, bestehend aus Aminosäureresten, Peptidresten und Proteinresten.

Besonders bevorzugt ist R ausgewählt aus der Gruppe bestehend aus Antibiotika, Chemotherapeutika, Cytostatika, Antigenen, Oligonucleotiden, Mediatoren, falschen Stoffwechselsubstraten und cytotoxischen Substanzen. Diese Arzneiwirkstoffe werden kovalent an das Verknüpfungsprodukt (I) gebunden und makrozytär aufgenommen.

Für die kovalente Einbindung von R an X, wie auch an A, stehen grundsätzlich zwei Bindungsmöglichkeiten zur Verfügung. R kann eine Bindung zu einer freien Aminogruppe des Chitosans eingehen. R kann ebenfalls an eine der Hydroxylgruppen von X und/oder von A binden.

Ausgehend von einem zugrundegelegten, Aminogruppen (-NH₂) -tragenden Polysaccharid X und/oder A kann die Bindung von Arzneiwirkstoffen R erfolgen, die Funktionalitäten besitzen, welche ausgewählt sind aus Carboxyl- (-COOH),
Carbonsäurehalogenid- (-C(O)Cl, -C(O)Br und/oder -C(O)I),
Carboxylalkylen- (-(CH₂)_{q}-COOH, mit q = 1 bis 10) oder
Ester-Gruppen (-COOAlk, wobei Alk eine Alkylgruppe mit ein bis sieben Kohlenstoffatomen ist).

Umgekehrt kann X und/oder A, das diese Funktionalitäten besitzt, eine Bindung mit Arzneiwirkstoffen R eingehen, die Aminogruppen (-NH₂) tragen.

Ausgehend von einem zugrundegelegten, Hydroxylgruppen (-OH) -tragenden Polysaccharid X und/oder A kann die Bindung von Arzneiwirkstoffen R erfolgen, die Funktionalitäten besitzen, welche ausgewählt sind aus
Isocyanat- (-NCO),
Carboxyl- (-COOH),
Carbonsäurehalogenid- (-C(O)CI, -C(O)Br und/oder -C(O)I),
Carboxylalkylen- (-(CH₂)_{q}-COOH, mit q = 1 bis 10) oder
Ester-Gruppen (-COOAlk, wobei Alk eine Alkylgruppe mit ein bis sieben Kohlenstoffatomen ist).

Umgekehrt kann X und/oder A, das diese Funktionalitäten besitzt, eine Bindung mit Arzneiwirkstoffen R eingehen, die Hydroxylgruppen (-OH) tragen.

Ist c = 0, ist R1 bevorzugt über eine Carbonsäureester-, Carbonsäureamid- und/oder Urethanbindung direkt an X gebunden. Ist d = 0, ist R2 bevorzugt über eine Carbonsäureester-, Carbonsäureamid- und/oder Urethanbindung direkt an A gebunden.

In einer weiteren Ausgestaltungsform der Erfindung können zusätzliche, bi-, tri- oder polyfunktionelle Moleküle zur Bildung eines Linkers eingesetzt werden, der die Verknüpfung des Arzneiwirkstoffs R mit X und/oder A bildet.

Geeignete Ausgangsverbindungen für Linker Z1 und/oder Z2 sind ausgewählt aus linearen oder verzweigten, gesättigten oder ungesättigten, aliphatischen oder alicyclischen Kohlenwasserstoffresten mit 1 bis 22, vorzugsweise 2 bis 15, besonders bevorzugt 3 bis 8 Kohlenstoffatomen; Aryl-, Aryl-C₁-C₄-Alkyl- und Aryl-C₂-C₆-Alkenylgruppen mit 5 bis 12, vorzugsweise 6 bis 12, besonders bevorzugt 6 Kohlenstoffatomen im Arylrest, die gegebenenfalls mit C₁-C₆-Alkyl- und/oder C₂-C₆-Alkoxygruppen substituiert sein können; oder Heteroaryl-, Heteroaryl-C₁-C₄-Alkyl- und Heteroaryl-C₂-C₆-Alkenylgruppen mit 3 bis 8 Kohlenstoffatomen im Heteroarylrest und einem oder zwei Heteroatom(en) ausgewählt aus N, O und 5, die mit C₁-C₆-Alkyl- und/oder C₂-C₆-Alkoxygruppen substituiert sein können, und
wobei die Ausgangsverbindungen für den Linker Z1 2 bis 20 funktionelle Gruppen zur Bildung der kovalenten Bindungen mit R1 und X enthält, und wobei die Ausgangsverbindungen für den Linker Z2 2 bis 20 funktionelle Gruppen zur Bildung der kovalenten Bindungen mit R2 und A enthält, wobei die funktionellen Gruppen jeweils unabhängig voneinander ausgewählt sind aus Hydroxyl- (-OH),
Amino- (-NH₂),
Carboxyl- (-COOH),
Isocyanat- (-NCO),
Carbonsäurehalogenid- (-C(O)CI, -C(O)Br und/oder -C(O)I),
Carboxylalkylen- (-(CH₂)_{q}-COOH, mit q = 1-10) oder
Ester-Gruppen (-COOAlk, wobei Alk eine Alkylgruppe mit ein bis sieben Kohlenstoffatomen ist).

In einer bevorzugten Ausführungsform werden bifunktionelle Moleküle zur Bildung eines Linkers eingesetzt. Ebenfalls bevorzugt sind trifunktionelle Moleküle zur Bildung eines Linkers. Besonders bevorzugt sind bifunktionelle und trifunktionelle Moleküle zur Bildung eines Linkers, die identische funktionelle Gruppen aufweisen.

Besonders geeignete Verbindungen sind z. B. Dicarbonsäuren, wie Oxalsäure, Malonsäure, Bernsteinsäure, Glutarsäure, Adipinsäure, Pimelinsäure, Azelainsäure, Sebacinsäure, Maleinsäure, Fumarsäure, Sorbinsäure, Phthalsäure, Terephthalsäure, Isophthalsäure, Agaricinsäure, Citronensäure, sowie deren C1-C10-Alkylester, Halogenide, und Anhydride; Diisocyanate, wie z. B. Toluylendiisocyanat, Bitoluylendiisocyanat, Dianisidindiisocyanat, Tetramethylendiisocyanat, Hexamethylendiisocyanat, m-Phenylendiisocyanat, m-Xylylendiisocyanat, C₁-C₆-Alkylbenzoldiisocyanat, 1-Chlorobenzol-2,4-diisocyanat, Cyclohexylmethandiisocyanat, 3,3'-Dimethoxydiphenylmethan-4,4'-diisocyanat, 1-Nitrobenzol-2,4diisocyanat, 1-Alkoxybenzol-2,4-diisocyanat, Ethylendiisocyanat, Propylendiisocyanat, Cyclohexylen-1,2-diisocyanat, 3,3'-Dichloro-4,4'-biphenylendiisocyanat, Diphenylendiisocyanat, 2-Chlorotrimethylendiisocyanat, Butylen-1,2-diisocyanat, Ethylidendiisocyanat, Diphenylmethan-4,4'diisocyanat, Diphenylethandiisocyanat, 1,5-Naphthalindiisocyanat, Cyclohexandiisocyanat und Isophorondiisocyanat; Diole, wie z. B. Ethylenglycol, Propylenglycol, Butylenglycol, und Neopentylglycol, Pentandiol-1,5,3-Methylpentandiol-1,5, Bisphenol A, 1,2- oder 1,4-Cyclohexandiol, Caprolactondiol (Reaktionsprodukt aus Caprolacton und Ethylenglycol), hydroxyalkylierte Bisphenole, Trimethylolpropan, Trimethylolethan, Pentaerythritol, Hexandiol-1,6, Heptandiol-1,7, Octandiol-1,8, Butandiol-1,4, 2-Methyloctandiol-1,8, Nonandiol-1,9, Decandiol-1,10, Cyclohexandimethylol, Di-, Tri- und Tetraethylenglykol, Di-, Tri- und Tetrapropylenglykol, Polyethylen- und Polypropylenglykole mit einem mittleren Molekulargewicht von 150 bis 15.000, Trimethylolethan, Trimethylolpropan und Pentaerythrit; und/oder Diamine, wie z. B. 1,2-Diaminoethan, 1,2- oder 1,3-Diaminopropan, 1,2-, 1,3- oder 1,4-Diaminobutan, 1,5-Diaminopentan, 2,2-Dimethyl-1,3-diaminopropan, Hexamethylendiamin, 1,7-Diaminoheptan, 1,8-Diaminooctan, Trimethyl-1,6-diaminohexan, 1,9-Diaminononan, 1,10-Diaminodecan, 1,12-Diaminododecan, 1,2-Diaminocyclohexan, 1,4-Diaminocyclohexan, 1,3-Cyclohexanbis(methylamin), 1,2-Phenylendiamin, 1,3-Phenylendiamin, 1,4-Phenylendiamin, 4,4'-Ethylendianilin, 4,4'-Methylendianilin, 4,4'-Diaminostilben, 4,4'-Thiodianilin, 4-Aminophenyldisulfid, 2,6-Diaminopyridin, 2,3-Diaminopyridin, 3,4-Diaminopyridin, 2,4-Diaminopyrimidin, 4,5-Diaminopyrimidin, 4,6-Diaminopyrimidin.

Die Verwendung solcher Linker ermöglicht unter anderem die Kombination von X und/oder von A mit den pharmazeutisch wirksamen Molekülresten R1 und/oder R2, wenn als pharmazeutisch wirksames Molekül R Verbindungen eingesetzt werden, die identische funktionelle Gruppen wie X und/oder von A tragen, z. B. jeweils Alkohole, oder aus einem anderen Grund nicht direkt miteinander unter Ausbildung einer Bindung reagieren können. Geeignete Linker bilden sowohl mit X und/oder A als auch mit den Wirkstoffen R1 und/oder R2 bevorzugt Carbonsäureester, Carbonsäureamide und/oder Urethane aus. Besonders bevorzugt sind Bindungen mit einem bifunktionellen Linker, ausgewählt aus Carbonsäureestern.

Vorteilhaft können weitere spezielle Reste in X eingeführt sein, die eine chemische Einbindung der pharmazeutisch wirksamen Substanz R1 erlauben, zum Beispiel Biotin, Aminosäuren oder sulfidgruppen-tragende Reste, wie Cystein.

Erfindungsgemäß können als pharmazeutisch wirksames Molekül R, das als R1 und/oder R2 an das Verknüpfungsprodukt (I) gebunden werden sollen, weiterhin Arzneimittel eingesetzt werden, die ausgewählt sind aus der Gruppe bestehend aus Abmagerungsmittel/Appetitzügler, Acidosetherapeutika, Aminosäuren (z. B. Histidin) oder modifizierte Aminosäuren, Analeptika/Antihypoxämika, Analgetika/Antirheumatika, Anthelminthika, Antiallergika, Antianämika, Antiarrhythmika, Antibiotika/Antiinfektiva, Antidementiva (Nootropika), Antidiabetika, Antidota, Antiemetika/Antivertiginosa, Antiepileptika, Antihämorrhagika (Antifibrinolytika und andere Hämostatika), Antihypertonika, Antihypoglykämika, Antihypotonika, Antikoagulantia, Antimykotika, Antiparasitäre Mittel (intern), Antiphlogistika, Antitussiva/Expektorantia, Arteriosklerosemittel, Balneotherapeutika und Mittel zur Wärmetherapie, Betarezeptoren-, Calciumkanalblocker und Hemmstoffe des Renin-Angiotensin-Systems, Broncholytika/Antiasthmatika, Cholagoga und Gallenwegstherapeutika, Cholinergika, Corticoide (intern), Dermatika (intern), Diätetika/Ernährungstherapeutika, Diagnostika und Mittel zur Diagnosevorbereitung, Diuretika, durchblutungsfördernde Mittel, Entwöhnungsmittel, Enzyminhibitoren, Enzympräparate und Transportproteine, Fibrinolytika, Geriatrika, Gichtmittel, Grippemittel, Gynäkologika, Hämorrhoidenmittel (Proktologika), Hepatika, Hypnotika/Sedativa, Hypophysen-, Hypothalamushormone, regulatorische Peptide und ihre Hemmstoffe, Immuntherapeutika und Zytokine, Infusions- und Standardinjektionslösungen, Organperfusionslösungen, Kardiaka, Karies-, Parodontosemittel und andere Dentalpräparate, Koronarmittel, Laxantia, Lipidsenker, Neuraltherapeutika, Magen-Darm-Mittel, Migränemittel, Mineralstoffpräparate, Muskelrelaxantia, Narkosemittel, Nebenschilddrüsenhormone, Calciumstoffwechselregulatoren, Osteoporosemittel, Neuropathiepräparate und andere neurotrope Mittel, Neurotransmitter (z. B. Dopamin) oder modifizierte Neurotransmitter, Ophthalmika, Otologika, Parkinsonmittel und andere Mittel gegen extrapyramidale Störungen, Psychopharmaka, Sinusitismittel, Roborantia/Tonika, Schilddrüsentherapeutika, Sera, Immunglobuline und Impfstoffe, Sexualhormone und ihre Hemmstoffe, Spasmolytika, Thrombozytenaggregationshemmer, Tuberkulosemittel, Umstimmungsmittel, Urologika, Venentherapeutika, Vitamine, Wundbehandlungsmittel, Zytostatika und Metastasenhemmer. Das heißt R1 und/oder R2 basieren auf einem Arzneistoff, der aus der oben genannten Gruppe ausgewählt ist.

Besonders bevorzugt ist R ausgewählt aus Inositol, Digoxin und Propofol.

In einer weiteren Modifikation ist R ausgewählt aus der Gruppe der Neuraminsäureverbindungen.

Die erfindungsgemäßen Verknüpfungsprodukte (I) können als biokompatibles, d. h. körperverträgliches Material verwendet werden. Bevorzugt finden sie Anwendungen als Implantat, chirurgische Hilfsmittel oder Komponenten in medizinischen Geräten.

Bevorzugte Verwendungen als Implantat sind Lang- oder Kurzzeitimplantate, wie z. B. künstliche Blutgefäße, Gefäßimplantate, künstliche Herzklappen, Herzmitralklappen, Sehnen und Bänderersatz, Knorpelersatz oder Patches zum Verschließen unerwünschter Öffnungen bei chirurgischen Eingriffen und Wundabdeckungen.

Bevorzugte Verwendungen als chirurgische Hilfsmittel sind chirurgische Werkzeuge, Einwegartikeln, die nur kurzzeitig intrakorporal eingesetzt werden, Katheter, Katheterschläuche, Nahtmaterial, bioabbaubares Nahtmaterial, Spritzen, extrakorporale Blutschläuche, Blutbeutel oder Beutel für Lösungen für intravenöse Anwendungen oder Beutelfolien.

Bevorzugte Verwendungen als Komponenten in medizinischen Geräten sind Teile von Herz-, Lungen- und Dialyse-Maschinen oder Filter, Blutbeutel, Infusionsschläuche, Schlauchpumpen oder Dialysemembranen.

Ebenso bevorzugt ist die Anwendung als Material für Kontaktlinsen, als Kosmetikzusatz für Haarconditioner, Feuchtigkeitscreme oder Nagellack, zur Immobilisierung von Zellen und Enzymen, als Träger für Affinitätschromatographie und Proteintrennung, für kontrollierte therapeutische Systeme (controlled drug delivery systems), für Systeme zur gezielten Wirkstoffreisetzung oder zum Einsatz bei Technologien für Gewebekulturen in vitro (tissue engineering).

Besondere Indikationen für die erfindungsgemäßen Verknüpfungsprodukte (I) sind in der Bereitstellung von Mikrosphären im Rahmen von immunologischen Anwendungen und bei Verbindung mit anderen arzneilich wirksamen Verbindungen als Trägerstoff zur Modulation von Arzneimittelwirkungen zu sehen. Die erfindungsgemäßen Verknüpfungsprodukte (I) ermöglichen die Verwendung eines in der Biologie weit verbreiteten Bestandteils von formstabilen Exoskeletten (bei Crustaceen, Insekten und Pilzen) als Gerüst für Blutgefäße und Implantate, die in Abhängigkeit von dem Substitutionsgrad des Polysaccharids X und der weiteren Vernetzung der Chitinverbindungen A untereinander vollständig biologisch abbaubar sind. Eine weitere Quervernetzung der Chitinbestandteile ist zum Beispiel durch Einbindung von bivalenten Linkermolekülen, wie oben aufgeführt, vor und nach der Einführung von X möglich. Für eine derartige Verwendung können die Implantate durch elektrostatische Anlagerung an elektrisch geladene Körper geformt werden.

Grundsätzlich kann jeder elektrostatisch aufladbare Körper oder Leiter als elektrisch geladener Körper verwendet werden, der sich mit dem anzulagernden Chitosanfilm nicht elektrochemisch umsetzt. Als Elektrodenmaterial sind vor allem Silber, Platin und Gold geeignet. Im Folgenden wird ein als Anlagerungsfläche geeigneter Schirm einer Kathodenstrahlröhre sowie eine elektrisch geladene rotierende Trägerplatte, die als elektrisch geladener Körper verwendet werden können, erläutert.

Das Verknüpfungsprodukt (I) ist bevorzugt durch eine zweistufige Reaktion eines Chitins oder Chitosans A mit einem Polysaccharid X erhältlich.

Für den Fall, dass
(a) die Verknüpfung eine Aminbindung ist, das Verfahren die folgenden Schritte umfasst:
   - Umsetzung des Polysaccharids A mit dem Polysaccharid X unter Bildung eines Imins, und
   - anschließende Reduktion des Imins zum Amin, oder für den Fall, dass
(b) die Verknüpfung eine Amidbindung ist, das Verfahren die folgenden Schritte umfasst:
   - Oxidation der Aldehydgruppe des Polysaccharids X, und
   - anschließende Umsetzung des Oxidationsprodukts mit dem Polysaccharid A.

Bei (a) reagiert die Aminogruppe des Chitins oder des Chitosans A im ersten Schritt mit der endständigen Aldehydgruppe des Polysaccharids X unter Ausbildung einer Schiffschen Base. In einem zweiten Schritt wird die Schiffsche Base mit einem Reduktionsmittel zum Amin reduziert. Die Reduktion des Imins zum Amin ist dem Fachmann wohlbekannt und wird unter den bekannten Bedingungen ausgeführt. Als Reduktionsmittel eignen sich beispielsweise salzartige Hydride wie LiAlH₄, LiBH₄, NaBH₄ oder NaBH₃CN. Es können jedoch auch andere, dem Fachmann bekannte Reduktionsmittel eingesetzt werden.

Zur Bildung einer Amidbindung (b) wird die Aldehydgruppe des Polysaccharids X zunächst oxidiert und das erhaltene Oxidationsprodukt, ein Lacton und/oder eine Carbonsäure, in einem nachfolgenden Schritt mit einem Polysaccharids A unter Bildung eines Carbonsäureamids (durch Reaktion des Lactons und/oder der Carbonsäure mit der Aminogruppe des Polysaccharids A) umgesetzt. Zur Oxidation kann jedes geeignete, dem Fachmann bekannte Verfahren verwendet werden. Bevorzugt wird ein Verfahren von Hashimoto (beschrieben in Hashimoto et al., Kunststoffe, Kautschuk, Fasern, Vol. 9, (1992) S. 1271-1279) verwendet, bei dem eine reduzierende Aldehyd-Endgruppe eines Saccharids selektiv oxidiert werden kann, wobei ein reaktiver Ester (Lacton) gewonnen wird. Die terminale Aldehydgruppe des Polysaccharids X wird bevorzugt durch Umsetzung mit Iod in Anwesenheit von Kalilauge selektiv oxidiert. Bevorzugt werden eine 0,1 N Iod-Lösung und/oder eine 0,1 N KOH-Lösung als Reagenzien verwendet. In einer bevorzugten Ausführungsform der Erfindung findet die Reaktion in organischen Lösungsmitteln, wie DMSO oder Ethyldimethylaminopropylcarbodiimid statt.

Bei der Herstellung des erfindungsgemäßen Verknüpfungsprodukts (I) unter Ausbildung einer Schiffschen Base (Schritt 1 von (a)) muss berücksichtigt werden, dass sowohl Chitin und Chitosan A als auch das Polysaccharid X über eine reduzierende Endgruppe im Molekül verfügen. Bei der Synthese der erfindungsgemäßen Verbindungen muss deshalb verhindert werden, dass die reduzierenden Endgruppen der Chitin- und Chitosanverbindungen A selbst mit der dem Stickstoffatom eines Chitins und/oder Chitosan A reagieren. Diese Reaktion der entständigen Aldehydgruppen mit den Aminogruppen des Chitosans wird bevorzugt durch die Bildung eines Chitosan- und/oder Chitinfilms sehr stark behindert. Hierbei würden Kopplungsprodukte entstehen, die mit den Verknüpfungsprodukten (I) konkurrieren.

Durch die Verwendung von Chitosan, welches nicht in organischen Lösungsmitteln gelöst wurde, kann das Gleichgewicht im ersten Schritt zwar zugunsten der Bildung des Verknüpfungsprodukts (I) verschoben werden, die so entstandenen Verbindungen verbleiben jedoch in größeren Aggregaten und Clustern, wodurch weitere erwünschte Reaktionen durch die sterische Behinderung stark beeinträchtigt werden. Beispielsweise wird die Durchführung einer regioselektiven Funktionalisierung von Verbindungen, die solche Aggregate bzw. Cluster gebildet haben, fast unmöglich.

Die Aggregat- und Clusterbildung kann im sauren Milieu vermieden werden, da sich Chitosan in Säuren, zum Beispiel in Essigsäure, gut löst. Das Polysaccharid A ist bevorzugt in einem Lösungsmittel gelöst, das ausgewählt ist aus der Gruppe, bestehend aus verdünnten schwachen organischen und anorganischen Säuren, wobei das Lösungsmittel einen pH-Wert von kleiner als 6,5, bevorzugt kleiner als 5,5 und besonders bevorzugt kleiner als 5,0 aufweist. Am meisten bevorzugt liegt der pH-Wert in einem Bereich zwischen 2,0 und 6,0. Besonders bevorzugt sind solche Lösungsmittel, die im menschlichen und/oder tierischem Stoffwechsel abbaubar sind, wie Essigsäure und Milchsäure.

Eine Chitosanlösung wird unter Ausbildung eines dünnen Films auf einen Träger aufgetragen. Da der gebildete Chitosanfilm als feste Matrix für die weiteren Reaktionen dienen soll und die Bildung von Schiffschen Basen durch verbleibende Säure der Lösung gestört wird, muss diese möglichst vollständig entfernt werden. Dies geschieht durch Waschen des Films, beispielsweise mit destilliertem Wasser oder Phosphatpuffer mit einem pH-Wert von größer 7,0. Hierbei wird ein Herunterspülen des bei niedrigem pH-Wert noch löslichen Polykations Chitosan von der Trägerplatte durch die erfindungsgemäß starke negative Aufladung der Trägerplatte verhindert. Bei positiv geladenen Platten hingegen konnte häufig ein vollständiges Wegschwimmen des Chitosanfilms beobachtet werden. Das Gleiche konnte bei entsprechend positiv polarisierten Kathodenstrahlröhren beobachtet werden. Zusätzlich wird zur Vermeidung eines Abspülens des Chitosans das Elutionsmittel in Rotation von peripher beginnend nach zentral aufgetragen. Der pH-Wert der abfließenden Elutionslösung gibt Aufschluss über die Vollständigkeit der Entfernung des sauren organischen Lösungsmittels.

Eine weitere Möglichkeit zur Entfernung des Lösungsmittels ist bevorzugt die Verdunstung der als Lösungsmittel verwendeten Essigsäure und/oder eines weiteren Lösungsmittels.

Bevorzugt wird ein Lösungsmittel verwendet, das nicht mit einem der Ausgangsstoffe oder Produkte reagiert. Insbesondere sollten Lösungsmittel zur Anwendung kommen, die keine störenden funktionellen Gruppen für die Bildung von Schiffschen Basen - wie beispielsweise Carboxylgruppen - aufweisen.

In einer bevorzugten Ausgestaltungsform der Erfindung wird als Lösungsmittel im ersten und/oder zweiten Schritt der Reaktion Dichlormethan, Tetrahydrofuran, Methanol, Ethanol, Dimethylsulfoxid oder Mischungen daraus verwendet. Besonders ist für den ersten Schritt der Iminbildung Dichlormethan als Lösungsmittel bevorzugt. Besonders ist für den zweiten Schritt der Reduktion Methanol als Lösungsmittel bevorzugt.

Für den ersten Reaktionsschritt und damit für die erfindungsgemäße Herstellung der Verbindungen ist die Oberflächenstruktur der hergestellten Chitosanfilme von entscheidender Bedeutung. Die Bildung von Aggregaten und Clustern muss bei der Herstellung der Filmstruktur weitgehend vermieden werden. Bevorzugt sind besonders dünne oder einlagige Chitosanfilme. Dünne und/oder einlagige Filme ermöglichen eine höhere Ausbeute des Verknüpfungsprodukts (I). Darüber hinaus wird eine Beurteilung der weiteren Belegungsdichte durch optische Mittel, wie Laser und Fluoreszenzdetektoren, Licht- und Elektronenmikroskope, ermöglicht.

Das erfindungsgemäße Verfahren führt zu Chitosanfilmen, die wenig Unregelmäßigkeiten aufweisen. Im Gegensatz dazu zeigt die mikroskopische Beurteilung der durch Eintauchen oder Abstreifen hergestellten Chitosanfilme starke Unregelmäßigkeiten der entstandenen Filmstruktur. Auch die Herauslösung des organischen Lösungsmittels mit destilliertem Wasser bzw. Phosphatpuffern bewirkte zusätzlich eine Aufwellung und Ablösung der hergestellten Filme. Wird das Lösungsmittel dagegen erst nach Trocknung des Films entfernt, wird die Bildung von Rissen und mikroskopisch sichtbaren Unregelmäßigkeiten gefördert.

Durch Zentrifugation filmbildender Strukturen auf rotierenden Trägerplatten können sehr homogene Filme mit wählbarer Schichtdicke hergestellt werden. Bei diesem Verfahren bleibt jedoch die Lage und Ausrichtung der Aminogruppen der Chitosanmoleküle A weitgehend dem Zufall überlassen. Die Aminogruppen können bei der Filmbildung der Trägerplatte oder der freien Oberfläche zugewandt sein. Im folgenden ersten Reaktionsschritt werden wegen der sterischen Behinderung lediglich diejenigen Aminogruppen mit dem Aldehyd des Polysaccharids X reagieren können, die der freien Oberfläche zugewandt sind.

Erfindungsgemäß wird die Lage und Ausrichtung der Aminogruppe in ihrer protonierten Form (Ammoniumgruppe) durch elektrostatische Aufladung der Oberfläche der Trägerplatte gesteuert. Bei einer positiv geladenen Oberfläche ordnen sich die Chitosanmoleküle wegen der elektrostatischen Abstoßung derart an, dass die Ammoniumgruppen von der Trägerplattenoberfläche wegzeigen.

Die maximale Dicke des Chitosanfilms gemäß der Erfindung ist diejenige, bei der die Ausrichtung der kationischen Gruppen gerade noch von dem elektrischen Ladungsmuster der Trägerplatte bestimmt wird. Bei dickeren Chitosanfilmen wird die Ausrichtung der protonierten Gruppen lediglich von Wechselwirkungen der Chitosanmoleküle untereinander bestimmt. Die maximal zulässige Schichtdicke ist deshalb von der Stärke der elektrischen Polarisation der Trägerplatte abhängig.

Die Anordnung der Chitosanmoleküle durch die Ausrichtung ihrer Ammoniumgruppen wird beibehalten, wenn das Chitosan bei der Entfernung des sauren Lösungsmittels in seine unlösliche Form übergeht, in der die Aminogruppen nicht protoniert sind und somit keine positive Ladung mehr tragen.

In einer Ausführungsform wird die Oberfläche der Trägerplatte mit Hilfe von Kathodenstrahlen elektrostatisch aufgeladen.

In dem erhaltenen (festen) Chitosanfilm sind signifikant mehr Aminogruppen von der Oberfläche der Trägerplatte weg als zur Trägerplatte hin orientiert. Eine Flüssigkeit, in der ein Polysaccharid X gelöst oder suspendiert ist, wird zu dem Film gegeben. Die Lösung weist bevorzugt einen pH-Wert in einem Bereich auf, bei dem sich das Chitosan nicht löst und bei dem seine Aminogruppen nicht protoniert vorliegen. Bevorzugt ist ein pH-Bereich von 6,5 oder größer, bevorzugt in einem Bereich von 6,8 bis 10, besonders bevorzugt von 7,0 oder größer, noch bevorzugter von 7,5 oder größer bis 8,0. Die Lösung umfasst vorzugsweise einen Puffer, besonders bevorzugt einen Phosphatpuffer.

Durch Bewegen der Trägerplatte, bevorzugt durch Rotieren oder Rütteln, wird der Kontakt der miteinander zu reagierenden Polysaccharide A und X optimiert. Hat das Polysaccharid X vollständig mit dem Chitosan A reagiert oder liegt das zu erreichende Gleichgewicht vor, nach etwa 30 Minuten, wird überschüssiges Polysaccharid X entfernt.

Eine weitere Ausführungsform stellt die Bindung von carboxymethylsubstituiertem Polysaccharid X an Chitosan dar. Hierbei kann neben der endständigen Aldehydgruppe des Polysaccharidmoleküls auch eine der Carboxylgruppen unter Ausbildung einer Schiffschen Base mit der Aminogruppe des Chitosans reagieren.

Zur Charakterisierung der Verbindung kann das Polysaccharid außer mit Hydroxyethyl- oder Carboxymethylgruppen auch mit Fluorescein oder anderen Markern substituiert werden.

Durch einen zweiten Schritt, in dem die entstandene Schiffsche Base unter den Fachmann wohlbekannten Bedingungen zum Amin reduziert wird, wird das Verknüpfungsprodukt (I) erhalten. Bevorzugt wird zur Reduktion ein salzartiges Hydrid eingesetzt, besonders bevorzugt Lithiumaluminiumhydrid (LiAlH₄), Lithiumborhydrid (LiBH₄), Natriumcyanoborhydrid (NaBH₃CN) oder Natriumborhydrid (NaBH₄).

In einer Ausführungsform können die Hydroxylgruppen der hydroxyethylsubstituierten Polysaccharide X mit Dicarbonsäuren oder Dicarbonsäurehalogeniden reagieren, wodurch die gebundenen Polysaccharidreste quervernetzt werden oder quervernetztes Polysaccharid X mit Chitosan A umgesetzt wird. Für die Quervernetzung sind unter anderem Oxalsäure, Malonsäure, Bernsteinsäure, Adipinsäure und deren Halogenide geeignet. Die Veresterung kann entsprechend der Reaktion zum Verknüpfungsprodukt (I) stattfinden, wobei intermolekulare Quervernetzungen als Strukturkomponente genutzt werden können.

Liegt die A als Film oder als Partikel gebunden vor, können die Polysaccharidmoleküle X erfindungsgemäß in Abhängigkeit von ihrer Konzentration, der Anzahl deacetylierter freier Aminogruppen von A sowie deren Ladungsmuster auf der stationären Struktur von A beliebig vereinzelt werden, wodurch der Abstand der einzelnen gebundenen Moleküle des Polysaccharids X zueinander in dem Verknüpfungsprodukt (I) in Abhängigkeit von der Verteilung der Aminogruppen von A frei wählbar ist. Bei hinreichend großen Abständen zwischen den einzelnen an A gebundenen Polysaccharidresten findet beispielsweise bei Zugabe von Dicarbonsäurehalogeniden keine Quervernetzung statt. Stattdessen können unter Ausbildung von Linkern pharmazeutisch wirksame Stoffe an X gebunden werden, ohne dass es zu einer in diesem Fall unerwünschten Quervernetzung kommt. Diese Ausgestaltung nutzt vorzugsweise Chitin- und/oder Chitosanmoleküle A mit hinreichend großem MW > 800.000 und Polysaccharide X mit relativ niedrigem MW <150.000, wobei A bevorzugt im Überschuss vorliegt.

In einer Ausführungsform umfasst das erfindungsgemäße Verfahren den weiteren nachfolgenden Schritt:
Substitution von X mit einem Rest der Formel (II)

   -Z1_{c}R1 (II)

   und/oder
Substitution von A mit einem Rest der Formel (III)

   -Z2_{d}R2 (III)
wobei R1 ein pharmazeutisch wirksamer Molekülrest ist, R2 ein pharmazeutisch wirksamer Molekülrest ist und R1 und R2 gleich oder verschieden sein können, und
wobei Z1 ein Linker ist, der sowohl an R1 als auch an X kovalent gebunden ist, Z2 ein Linker ist, der sowohl an R2 als auch an A kovalent gebunden ist, c = 1 oder 0 ist, d = 1 oder 0 ist, und
wobei das molare Verhältnis des Restes der Formel (II) zu X a ist, das molare Verhältnis des Restes der Formel (III) zu A b ist, a eine ganze Zahl zwischen 0 und 1000, b eine ganze Zahl zwischen 0 und 1000 ist, und wenigstens a oder b von Null verschieden ist.

Ein Sonderfall des Syntheseverfahrens zur Einführung von Arzneistoffen ist die Substitution des Verknüpfungsprodukts (I), in dem Reste der oben genannten Formel (II) kovalent an X gebunden sind, wobei in einem weiteren Schritt A und X durch Spaltung der Amin- und/oder Amidbindung voneinander getrennt werden. In anderen Worten, nach der Substitution von X mit einem Rest der Formel (II) werden X und A in einem weiteren Schritt voneinander getrennt. Dem Fachmann sind die Bedingungen, unter denen eine gezielte Spaltung der A-X-Bindung zweckmäßig, d.h. ohne oder mit lediglich geringer Beeinträchtigung der Struktur von X, an dem Reste der Formel (II) gebunden sind, durchgeführt werden kann, bekannt. Geeignete Verfahren sind, in Abhängigkeit von R1 und der Bindung zwischen X und A, unter anderem die Hydrolyse in alkalischen Medien, optional in Anwesenheit eines Metallkatalysators, die enzymatische Hydrolyse, bevorzugt die Verwendung von Proteasen und die von-Braun-Aminspaltung.

Die Produkte derartiger Spaltungsreaktionen sind wenigstens das mit Resten der Formel (II) substituierte Polysaccharid X und entsprechen den in der EP-A-1230935 als modifizierte Kolloide beschriebenen Verbindungen. Das erfindungsgemäße Verfahren stellt damit eine Verbesserung des Verfahrens bzw. einen Zwischenschritt bei der Herstellung der in EP-A-1230935 beschriebenen Verbindungen dar. Gemäß dem Verfahren werden Polysaccharide regioselektiv mit Arzneimittelwirkstoffen oder Resten substituiert, durch Vereinzelung und Ausrichtung der Polysaccharide auf einem Chitosanfilm, indem die terminale Aldehydgruppe des Polysaccharids unter Ausbildung einer Schiffschen Base mit einer freien Aminogruppe eines nach seiner elektrischen Ladung ausgerichteten Chitosanfilms kovalent verbunden wird. Das Verfahren kann durch die Vorrichtung durchgeführt und gesteuert werden.

In einem weiteren Schritt ist es möglich, die Substanzen R1 und/oder R2 in das Verknüpfungsprodukt (I) regioselektiv einzuführen, optional unter Verwendung eines Linkers. Zur regioselektiven Einführung von Substituenten kann die Verbindung ladungsabhängig an sehr komplex geladene Elektrodenstrukturen angelagert werden. Die ladungsabhängige Ausrichtung der filmbildenden Chitosanmoleküle kann durch Anlagerung an elektrisch geladene plane nanostrukturierte Elektroden beeinflusst werden. Diese nanostrukturierten Leiterbahnen können durch elektronenmikroskopische Verfahren im Hochvakuum in Elektroden eingebrannt werden.

Die Vereinzelung der an das Polysaccharid A zu bindenden Polysaccharide X lässt sich neben der Wahl des Grades der Deacetylierung des Polysaccharids A, d. h. der Zahl seiner reaktionsfähigen Aminogruppen, auch mit Hilfe von Makromolekülen beeinflussen, die sich vor der Reaktion des Polysaccharids A mit dem Polysaccharid X zum Verknüpfungsprodukt (I) über intermolekulare Anziehungskräfte an das Polysaccharid X anlagern und so als Abstandshalter zwischen den einzelnen Molekülen des Polysaccharids X fungieren. Geeignet ist jedes Makromolekül, das sich an ein Polysaccharid X anlagern kann und mit ihm große parallel angelagerte Molekülverbände bilden kann und das gleichzeitig keine funktionellen Gruppen aufweist, die es unter den Reaktionsbedingungen der folgenden Verfahrensschritte zu einer Reaktion mit dem Polysaccharid X und/oder Polysaccharid A unter Bildung einer kovalenten Bindung befähigt. Das heißt, für die Anlagerung von Makromolekülen, die nicht kovalent in einem Verknüpfungsprodukt (I) eingebunden sein sollen, kommen Makromoleküle, insbesondere Polysaccharide, in Frage, die einerseits mit den Aminogruppen des Chitosans keine kovalente Bindung durch Ausbildung einer Schiffschen Base eingehen können, andererseits jedoch hinreichend starke intermolekulare Anziehungskräfte zum Polysaccharid X aufweisen.

Es ist bekannt, dass zwischen kappa-Carrageen und Acemannanen sehr starke intermolekulare Anziehungskräfte wirken, die zur Anlagerungen der beiden Polysaccharide aneinander führen. So können beispielsweise kappa-Carrageene mit Acemannanen wie in einer besonderen Ausgestaltung parallel angelagerte Molekülverbände bilden. Erfindungsgemäß bildet das Polysaccharid X in einem der Bindungsbildung zwischen X und A vorgelagerten Schritt parallel angelagerte Molekülverbände mit Makromolekülen, bevorzugt kappa-Carrageen, Glycoproteinen oder Makromolekülen aus Zellmembranen. Diese Makromoleküle sollten keine funktionellen Gruppen aufweisen, die sie unter den Reaktionsbedingungen der folgenden Schritte zu einer Reaktion mit dem Polysaccharid X und/oder Polysaccharid A unter Bildung einer kovalenten Bindung befähigen würde.

Erfindungsgemäß können die endständigen Aldehydgruppen des kappa-Carrageens beispielsweise durch Umsetzung mit salzartigen Hydriden wie Natriumborhydrid zunächst in Abwesenheit des Chitosanmoleküls A reduziert werden. Das kappa-Carrageen ohne reduzierende Aldehydgruppe kann anschließend mit den Acemannanen größere Cluster bilden. Bei der Reaktion des Acemannans mit den Amingruppen des Polysaccharids A dient das kappa-Carrageen als Abstandshalter, ohne selbst an die Amingruppen kovalent gebunden zu werden. Eine enge Besetzung der Amingruppen des Polysaccharids A durch Acemannan ist sterisch behindert. Vor Einbindung der Arzneimittelwirkstoffe R1 und/oder R2 müssen diese reduzierten Polysaccharide wieder eluiert werden.

In einer besonderen Ausgestaltung können - nachdem ihre funktionellen Gruppen, die mit denen der Polysaccharide X und/oder A reagieren können, entfernt und/oder mit Schutzgruppen geschützt wurden - von Mikroorganismen oder Zellen synthetisierte Makromoleküle als Abstandshalter, der sich an das Polysaccharid X anlagert, genutzt werden, um den Einbau der Polysaccharide X in ein erfindungsgemäßes Verknüpfungsprodukt (I) sterisch zu beeinflussen. Solche Makromoleküle schließen Polysaccharide und Glycoproteine aus den Zellmembranen von Bakterien, Pilzen und Hefen ein.

Bei Verwendung von Polysacchariden X mit hoher Neigung zu intermolekularen Bindungskräften, wie zum Beispiel van-der-Waals-Kräften, kann dem Verknüpfungsprodukt (I) eine hohe Affinität zu den zur sterischen Beeinflussung eingesetzten, nicht reduzierenden biologischen Strukturen verliehen werden.

In einer Ausgestaltung wird die weitere Substitution von X und/oder A durch Komplexbildung mit Metallen sowie durch Elektroden und andere elektrochemische Mittel beeinflusst.

Die Verknüpfungsprodukte (I) weisen eine Streuung des Molekulargewichts und der Ladungsverteilung im Molekül auf und unterscheiden sich zudem ebenfalls von den Ausgangsstoffen durch ihr Molekulargewicht und der Ladungsverteilung im Molekül. Daher ist eine Trennung der Ausgangsstoffe von den Reaktionsprodukten und/oder eine Reinigung der Reaktionsprodukte durch Gelpermeations-Chromatographie und/oder Elektrophorese möglich, wobei die Reaktionsprodukte entsprechend ihrer Größe (genauer: ihrem hydrodynamischen Volumen) und/oder ihrer elektrophoretischen Mobilität gereinigt und/oder von den Ausgangsstoffen abgetrennt werden.

In einer Ausführungsform der Erfindung wird ein Arzneistoff R3 koordinativ an das Verknüpfungsprodukt (I) gebunden (komplexiert). R3 ist bevorzugt ein Metallion. Besonders bevorzugt ist R3 Eisen, vorzugsweise Fe^{II}, Kalium, Magnesium, Zink, Calcium, Gadolinium und/oder Kupfer.

Das komplexierende Verknüpfungsprodukt (I) kann erfindungsgemäß so gewählt werden, dass der Komplex R3 im Körper freisetzen kann, um ihm ein Spurenelement oder wichtiges Mineral zuzuführen. In einer anderen Ausführungsform wird das komplexierende Verknüpfungsprodukt (I) so gewählt, dass der Komplex R3 im Körper nicht freisetzen kann, um beispielsweise die Anwendung des Komplex als Kontrastmittel, vorzugsweise mit R3 = Gadolinium, zu ermöglichen.

Die beschriebene Vorrichtung wird bevorzugt zur Herstellung des Verknüpfungsprodukts (I) verwendet. Die offenbarte Vorrichtung umfasst eine elektrostatisch aufladbare Trägerplatte 1 aus einem isolierendem Material, wie Glas, Kunststoff oder Bernstein, so dass sich durch elektrostatische Aufladung der Trägerplatte 1 ein elektrisches Feld ausbilden kann. Mit Hilfe der erfindungsgemäßen Vorrichtung können nanostrukturierte Oberflächen aus der flüssigen Phase erzeugt werden. Weiterhin können Oberflächen gezielt geometrisch funktionalisiert werden, um spezifisch Moleküle oder mikroskopische Partikel elektrostatisch zu fixieren. Mittels elektrostatischer Strukturierung können Partikel, die sich in Flüssigkeiten befinden, beispielsweise gelöste Chitosanmoleküle, mittels elektrischer Felder bewegt und gezielt positioniert werden.

In einer besonderen Ausführungsform des erfindungsgemäßen Verfahrens umfasst das Verfahren die folgenden Schritte: Aufbringen einer Lösung oder Suspension von Chitosan oder Chitin A auf die Trägerplatte (1); Elektrostatische Aufladung der Trägerplatte (1), um ein elektrisches Feld auszubilden; Herstellen eines Chitosan- bzw. Chitinfilms; Umsetzen des Chitosans oder Chitins A durch In-Kontakt-bringen des Chitosan- oder Chitinfilms mit einer Lösung oder Suspension des Polysaccharids X bei einem pH-Wert größer als 6,8 unter Bildung einer Schiffschen Base; Reduktion der Schiffschen Base durch Zugeben eines Reduktionsmittels, wodurch das Verknüpfungsprodukt (I) erhalten wird. In einem weiteren Schritt kann ein Umsetzen des Verknüpfungsprodukts (I) mit R1 und optional Z1 und/oder mit R2 und optional Z2 folgen, wodurch das mit Resten der Formel (II) und/oder (III) substituierte Verknüpfungsprodukt (I) erhalten wird. Nachfolgend kann der folgende Schritt durchgeführt werden: Umsetzen des wenigstens mit Resten der Formel (II) substituierten Verknüpfungsprodukts (I) unter Spaltung der Aminbindung und/oder Amidbindung zwischen A und X, wodurch wenigstens das mit Resten der Formel (II) substituierte Polysaccharid X erhalten wird.

Die Trägerplatte 1 kann in einer Ausgestaltung rotierbar sein, wobei die Drehzahl der Rotation mittels eines Motors steuerbar einstellbar und mittels eines Drehzahlmessers ermittelbar ist. Die Trägerplatte 1 ist vorzugsweise planar. In einer anderen Ausführungsform ist die Trägerplatte konkav ausgestaltet und bildet so ein Gefäß.

Konkav gekrümmte Trägerplatten ermöglichen die Durchführung von chemischen Reaktionen in dem durch die Krümmung entstandenen Reaktionsgefäß. Dabei kann die Mischung der zugesetzten Reagenzien durch langsame Rotation des Gefäßes ohne Ablösung oder Störung der gebildeten Filmstrukturen durchgeführt werden. Durch Erhöhung der Drehzahl können die Reagenzien ohne Störung der Filmstrukturen über den Rand abzentrifugiert, d. h. entfernt werden.

Die Trägerplatte 1 kann mit im Stand der Technik bekannten Maßnahmen elektrostatisch aufgeladen werden. In einer Ausführungsform kann eine Seite der rotierenden Trägerplatte an eine isoliert eingespannte Papieroberfläche angenähert und damit elektrostatisch negativ aufgeladen werden. Es entsteht eine entgegengesetzte positive Aufladung auf der Gegenseite der Trägerplatte.

Optional ist die Trägerplatte 1 steuerbar elektrostatisch aufladbar. In einer weiteren Ausgestaltung sind Elektroden in oder auf der Oberfläche der Trägerplatte angeordnet. Durch Aufladung der Elektroden können komplexe Ladungsmuster auf der Oberfläche der Trägerplatte 1 entstehen. Die Elektroden sind mit einem Stromgenerator verbunden. In einer bevorzugten Ausgestaltung ist die Trägerplatte 1 über ihre Achse mit dem Stromgenerator verbunden. In einer Ausgestaltung erfolgt die Verbindung einer rotierbaren Trägerplatte 1 über Schleifkontakte.

Optional ist eine Einrichtung zur Erzeugung einer elektrischen Ladung auch zur Messung dieser Ladung fähig. In einer Ausgestaltung der Erfindung umfasst die offenbarte Vorrichtung wenigstens eine Einrichtung 2 zur Erzeugung und Messung einer elektrostatischen Ladung der Oberfläche der Trägerplatte, die fähig ist, Ober- und Unterseite der rotierbaren Trägerplatte unterschiedlich elektrostatisch aufzuladen. In einer Ausgestaltung der Erfindung umfasst die erfindungsgemäße Vorrichtung wenigstens eine Einrichtung 3 zur Erzeugung und Messung unterschiedlicher Ladungen auf der Oberfläche der Trägerplatte, wobei die Einrichtung eine Kathode, die mit dem Mittelpunkt der rotierbaren Trägerplatte elektrisch leitend verbunden ist, sowie eine ringförmige Anode auf einem äußeren Kreis der Oberfläche der Trägerplatte umfasst, wobei die Elektroden an einen Stromgenerator angeschlossen sind.

In einer Ausgestaltung ist über dem Mittelpunkt der Trägerplatte eine Elektrode angeordnet. Die Elektrode kann durch Annäherung an die Trägerplatte mit dem Chitosanfilm bzw. den zugesetzten Reagenzien elektrisch leitend verbunden werden. In einer bevorzugten Ausgestaltung ist das Elektrodenmaterial Graphit.

In einer weiteren Ausgestaltung des Verfahrens ist die Trägerplatte nicht rotierbar gehalten, sondern die mit einem Chitosanfilm beschichtete Trägerplatte ist auf dem Schirm mindestens einer Kathodenstrahlröhre angeordnet. Bevorzugt ist die Trägerplatte auf dem Schirm der Kathodenstrahlröhre als Reaktionsgefäß ausgeführt. Durch entsprechende Aussteuerung des Kathodenstrahls durch Ablenkplatten und/oder Ablenkspulen können spezifische Ladungsmuster auf der Oberfläche der Trägerplatte erzeugt werden, die sowohl die Anlagerung der positiv geladenen Aminogruppen des Chitosans, als auch die nachfolgenden chemischen Reaktionen - Elektronenverschiebungen und Oxidoreduktionen - spezifisch beeinflussen.

Vorteilhaft können mit bildgebenden Verfahren, wie zum Beispiel mit der Elektronenmikroskopie aufgenommene Strukturen, zur Erzeugung einer spezifischen Ladungsverteilung auf der in die Kathodenstrahlröhre integrierte Trägerplatte herangezogen werden. In besonderer Ausgestaltung dieser Methode kann der Kathodenstrahl durch Ablenkspulen auf ein Sichtfenster umgelenkt werden, so dass das Ladungsmuster, welches auf die Trägerplatte fällt, durch Umlenkung auf das Sichtfenster beobachtet werden kann. Der Abstand zwischen Kathode und Trägerplatte kann kleiner oder größer sein als der Abstand zwischen Kathode und Sichtfenster. Durch entsprechende Ausführung der Abstände zwischen Kathode und Sichtfenster sowie Kathode und Trägerplatte kann das auf der Trägerplatte generierte Ladungsmuster auf einem (weiter beabstandeten) Sichtfenster vergrößert dargestellt werden. Durch entsprechende Verbindung sowohl des bildgebenden Elektronenmikroskops, als auch der die Trägerplatte ladenden Kathodenstrahlröhre mit einem Computer und der Beobachtung der auf der Trägerplatte hergestellten Strukturen mit dem verbundenen Elektronenmikroskop, können die beiden Systeme aufeinander abgestimmt werden. Bevorzugt sind der Kathodenstrahl und die Mittel zu seiner Steuerung und Ablenkung mit einem Computer verbunden, der Informationen von einem Elektronenmikroskop oder einem anderen bildgebenden Gerät erhält.

Die offenbarte Vorrichtung kann weiterhin Einrichtungen 6 zur Durchleuchtung der Trägerplatte 1 sowie Lichtdetektoren zur Messung des durch die Trägerplatte 1 durchfallenden Lichts umfassen. In einer Ausgestaltung umfasst die Vorrichtung Einrichtungen zur Beleuchtung der Oberfläche der Trägerplatte sowie Lichtdetektoren zur Messung des durch die Trägerplatte reflektierten Lichts. Unabhängig davon kann die Vorrichtung Einrichtungen zur Magnetisierung der gebildeten Filme auf der Oberseite der Trägerplatte sowie zur Messung der Magnetfelder auf der Oberseite der Trägerplatte umfassen. Die Einrichtung ist bevorzugt beweglich über und/oder unter der Trägerplatte angeordnet. Bevorzugt kann sie bezüglich der Trägerplatte in wenigstens eine Richtung bewegt werden, beispielsweise mittels eines Schrittmotors 61 und einer Welle 62.

Bevorzugt umfasst die Vorrichtung eine über dem Mittelpunkt der Trägerplatte 1 befindliche Pipettier- bzw. Dosiereinrichtung 4, deren Abstand zur Trägerplatte 1 verändert werden kann. Optional umfasst die Vorrichtung weitere Dosiereinrichtungen, die vom Mittelpunkt der Trägerplatte wählbar beabstandet sind, wobei auch deren Höhen über der Trägerplatte steuerbar verändert werden können.

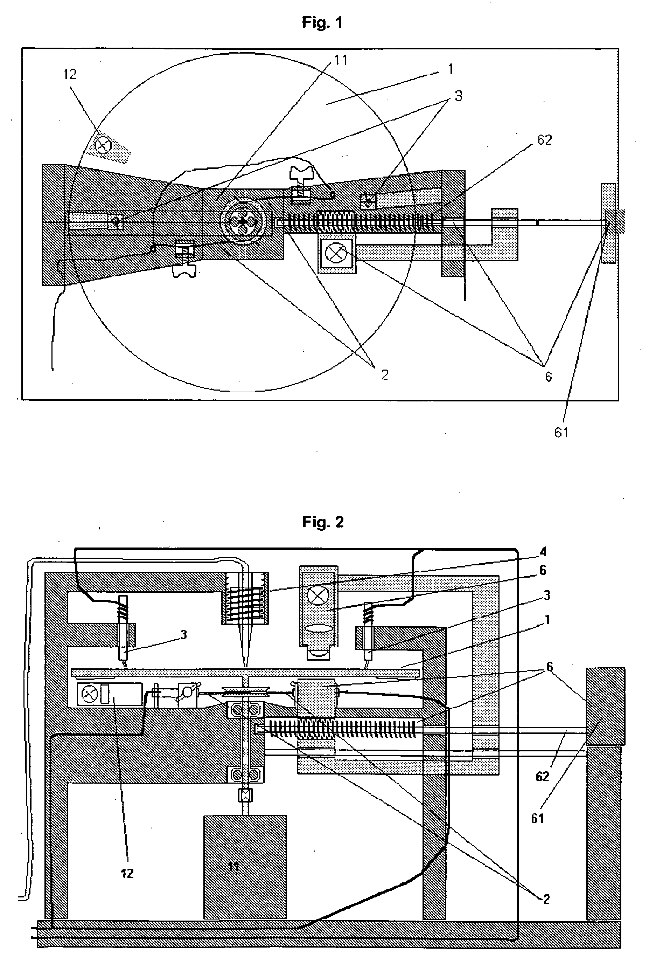

Figur 1 zeigt eine Draufsicht einer beispielhaften Ausführung der erfindungsgemäßen Vorrichtung. Figur 2 zeigt einen Querschnitt der gleichen Ausführung, in der
- 1: eine steuerbar elektrostatisch aufladbare Trägerplatte ist, die mit einstellbarer Drehzahl rotieren kann;
- 2: eine Einrichtung zur Erzeugung und Messung einer elektrostatischen Ladung der Oberfläche der Trägerplatte 1 ist, beispielsweise durch unterschiedliche elektrostatische Aufladung von Ober- und Unterseite der rotierbaren Trägerplatte;
- 3: eine Einrichtung zur Erzeugung und Messung unterschiedlicher Ladungen auf der Oberfläche der Trägerplatte 1 ist, beispielsweise durch Einbau einer Kathode, die mit dem Mittelpunkt der rotierbaren Trägerplatte elektrisch leitend verbunden ist, und einer ringförmigen Anode auf einem äußeren Kreis der Oberfläche der Trägerplatte, wobei die Elektroden an einen Stromgenerator angeschlossen sind;
- 4: eine über dem Mittelpunkt der Trägerplatte 1 befindliche Pipettier- bzw. Dosiereinrichtung ist, deren Abstand zur Trägerplatte verändert werden kann; und
- 6: eine Einrichtung zur Durchleuchtung der Trägerplatte 1 sowie Lichtdetektoren zur Messung des durch die Trägerplatte 1 durchfallenden Lichts sind, wobei die Einrichtung 6 einen Schrittmotor 61 und eine Welle 62 umfasst;
- 11: ein Motor ist, der die rotierbare Trägerplatte antreiben kann; und
- 12: ein Drehzahlmesser ist.

Die Erfindung wird durch die nachfolgenden Beispiele näher erläutert, ohne jedoch darauf beschränkt zu sein.

### Beispiele

### Beispiel 1

10 mg hochviskoses Chitosan (2-Amino-2-desoxy-(1→4)-β-D-glucopyranan) (Fluka Biochemika) werden in 12 ml destilliertem Wasser gelöst. Anschließend werden 0,5 mg einer nach DeBelder und Granath hergestellten Fluoresceinisothiocyanat (FITC) -markierten HES 200/0,5 mit einem DS für Fluorescein von 0,02 in 1,5 ml einer 0,1 N Phosphatpufferlösung pH 7,5 gelöst und abgedunkelt unter Schütteln zugemischt. Nach 30 Minuten werden 0,025 g Natriumcyanoborhydrid, NaBH₃CN, (ACROS ORGANICS, New Jersey) zugegeben, das Gemisch wird geschüttelt und für 2 Stunden abgedunkelt bei Raumtemperatur stehen gelassen. Das Reagenz wird alle 30 Minuten von Hand geschüttelt, bis keine Bläschen mehr aufsteigen. Spätestens nach 120 Minuten wird erneut die gleiche Menge von 0,025 g Natriumcyanoborhydrid zugegeben und das Gemisch wird in gleicher Weise behandelt. Mit einer gleich zusammengesetzten Kontrolllösung wird ohne die Zugabe von Natriumcyanoborhydrid genauso verfahren.

Nach 72 Stunden werden beide Reagenzien dialysiert und gefriergetrocknet. Das mit Natriumcyanoborhydrid umgesetzte Gemisch zeigt eine deutliche Gelbfärbung der Chitosangranula, während die nicht mit Natriumcyanoborhydrid behandelten Granula keine sichtbare Färbung aufweisen. Bei Beleuchtung mit einer Fluoreszenzlampe (Wellenlänge 540 - 590 nm) kann eine fluoreszierende Gelbfärbung beobachtet werden. Anschließend werden beide der gefriergetrockneten Reagenzien einem starken elektrischen Feld einer negativen Ladung ausgesetzt. Die nicht mit Natriumcyanoborhydrid versetzte Trockensubstanz wird sofort durch das elektrische Feld angezogen. Die erfindungsgemäß mit Natriumcyanoborhydrid versetzte Substanz liegt nicht in geladener Form (Polykation) vor und wird daher von dem elektrischen Feld nicht beeinflusst.

### Beispiel 2

10 mg hochviskoses Chitosan (2-Amino-2-desoxy-(1→4)-β-D-glucopyranan) (Fluka Biochemika) werden in 10 ml destilliertem Wasser gelöst. Anschließend werden 0,5 mg einer nach DeBelder und Granath hergestellten FITC-markierten HES 200/0,5 mit einm DS für Fluorescein von 0,02 werden in 1,5 ml einer 0,1 N Phosphatpufferlösung pH 7,5 gelöst und abgedunkelt unter Schütteln zugemischt. Nach 30 Minuten werden 0,025 g Natriumcyanoborhydrid, NaBH₃CN, (ACROS ORGANICS, New Jersey) zugegeben. Das Gemisch wird geschüttelt und für 2 Stunden abgedunkelt bei Raumtemperatur stehen gelassen. Das Reagenz wird alle 30 Minuten von Hand geschüttelt, bis keine Bläschen mehr aufsteigen. Spätestens nach 120 Minuten wird erneut die gleiche Menge von 0,025 g Natriumcyanoborhydrid zugegeben und dieses in gleicher Weise behandelt.

### Beispiel 3

2 g niedrigviskoses Chitosan (2-Amino-2-desoxy-(1→4)-β-D-glucopyranan) (Fluka Biochemika) werden in 50 ml 2 N Essigsäure unter Schütteln gelöst. Das Gemisch wird 36 Stunden stehen gelassen bis keinerlei Luftbläschen mehr sichtbar sind. Ein planer Glasobjektträger wird in die in Fig. 1 dargestellte Film-Zentrifuge eingespannt. Die über dem Drehpunkt der Film-Zentrifuge befindliche Pipettiereinrichtung wird mit der Chitosanlösung gefüllt. Die Zentrifuge wird mit 200 U/min in Rotation versetzt und mit einem Generator negativ aufgeladen. Die Pipettiereinrichtung wird der rotierenden Trägerplatte langsam angenähert. Zunächst werden 200 µl der Chitosanlösung auf die Mitte der Trägerplatte aufgetragen und durch Erhöhung der Drehzahl als Film auf der Trägerplatte verteilt. Der Radius der kreisförmigen Filmstruktur wird mit einer über der Filmzentrifuge angebrachten Lampe und Messeinrichtung erfasst. Die Drehzahl der Zentrifuge wird solange erhöht, bis der Radius des gebildeten Films nicht mehr zunimmt. Der Film wird bei 300 U/min über 12 h lang getrocknet.

Der Film wird am äußeren Rand des Films beginnend bei einer Drehzahl von 150 U/min mit Wasser gewaschen, bis die abtropfende Waschlösung einen neutralen pH aufweist. Zur Trägerplatte werden 3 ml Phosphatpuffer gegeben. 5 g einer HES-460 werden vollständig in 7 ml Wasser gelöst und zu der Trägerplatte zugegeben. Nach 30 Minuten werden 0,025 mg Natriumcyanoborhydrid NaBH₃CN (ACROS ORGANICS, New Jersey) zugegeben.

Das Gemisch wird für 30 min in eine langsame Rotation gebracht und für 2 Stunden bei Raumtemperatur stehen gelassen. Danach wird das Reagenz alle 30 Minuten über einen Zeitraum von 10 Minuten in Rotation versetzt bis keine Bläschen mehr aufsteigen. Spätestens nach 120 Minuten wird erneut die gleiche Menge von 0,025 mg Natriumcyanoborhydrid zugegeben und in gleicher Weise behandelt. Nach 72 Stunden werden die Reagenzien über der Trägerplatte abzentrifugiert, das Präparat wird mit Phosphatpuffer pH 7,5 mehrfach gewaschen, getrocknet und elektronenmikroskopisch untersucht. Mit einer gleich geladenen Trägerplatte wird ohne die Zugabe von Natriumcyanoborhydrid genauso verfahren.

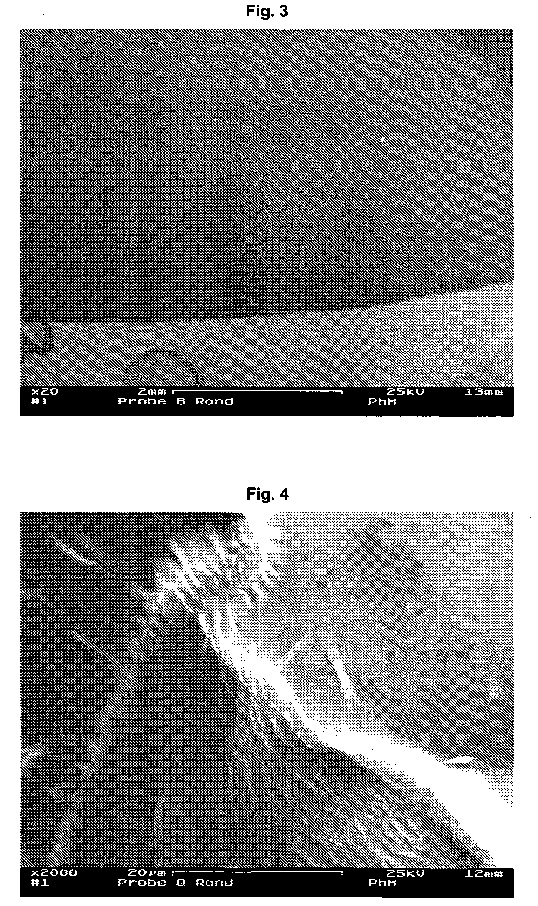

Bei der Umsetzung mit Natriumcyanoborhydrid kann beobachtet werden, dass die Bläschenbildung fast ausschließlich im Randbereich der Probe erfolgt. Figur 3 zeigt den Chitosanfilm des Beispiels 3, der ohne die Zugabe von Natriumcyanoborhydrid entstanden ist. Die Figur 4 zeigt einen Chitosanfilm nach der Durchführung des erfindungsgemäßen Verfahrens im Beispiel 3. Es zeigen sich im Randbereich des Präparates deutliche Veränderungen und Aufwellungen, die in den mittleren Bereichen des Films nicht beobachtet werden können. Die weitgehende Beschränkung dieser Veränderung auf die Randzone des Films konnte nur bei negativer Aufladung der Trägerplatte beobachtet werden. Diese Beobachtungen zeigen, dass durch die elektrische Polarisation der Trägerplatte eine Ausrichtung der kationischen Gruppen des Chitosanmoleküls zur Platte hin erfolgte und damit lediglich in der Randzone für die erfindungsgemäße Reaktion zur Verfügung stand. Eine Bläschenbildung nach Zugabe mit Natriumcyanoborhydrid konnte bei negativer Aufladung der Trägerplatte ebenfalls nur im Bereich der Randzone beobachtet werden.

### Beispiel 4

5 g Chitin werden in 2 N Essigsäure unter Schütteln suspendiert. Das Gemisch wird stehen gelassen bis keine Luftbläschen mehr aufsteigen und in einem Dreihalskolben mit Stickstoff gespült. Anschließend werden 250 ml 0,5 N NaOH langsam zugegeben. Das Gemisch wird für 20 Minuten auf 95°C erhitzt. Der Rückstand wird mit einem Überschuss an Wasser gewaschen bei 80°C getrocknet.

Das entstandene Chitosan wird in 2 N Essigsäure unter Schütteln gelöst und mit der in Beispiel 3 beschriebenen Vorrichtung auf einer positiv geladenen Platte der Filmzentrifuge über 12 h mit 300 U/min zentrifugiert. Anschließend wird vom Rand beginnend bei niedrigerer Drehzahl mit Wasser gewaschen, bis die abtropfende Waschlösung einen neutralen pH aufweist. Der Film auf der Trägerplatte wird in 3 ml Phosphatpuffer (pH 7,5) aufgenommen. 1 g einer HES 130/0,5 werden in 5 ml H₂O gelöst und auf die Trägerplatte pipettiert.

Nach 30 Minuten werden 0,025 mg Natriumcyanoborhydrid zugegeben. Das Gemisch wird für 30 Minuten in eine langsame Rotation versetzt und danach 2 Stunden stehen gelassen. Danach wird die Trägerplatte für 10 Minuten in langsame Rotation versetzt bis keine Bläschen mehr aufsteigen. Nach 120 Minuten werden erneut 0,025 mg Natriumcyanoborhydrid zugegeben und in gleicher Weise behandelt. Nach 72 h wird die überstehende Lösung abzentrifugiert und das Präparat mit Phosphatpuffer mehrfach gewaschen und getrocknet.

Die Trägerplatte mit dem hergestellten Präparat wird in ein Reaktionsgefäß mit einem Tropftrichter und einer pH-Elektrode gelegt und vorsichtig mit Wasser beschichtet. Mit verdünnter Natronlauge wird ein pH-Wert zwischen 8 und 8,5 eingestellt. 0,5 g Pyridin werden vorsichtig zugegeben und vorsichtig geschüttelt. Danach werden zunächst 30 mg Malonsäuredichlorid zugegeben und das Reaktionsgefäß in langsame Rotation versetzt. Im Anschluss werden 50 mg Inositol zugegeben. Das Reaktionsgefäß wird bei 60°C über 2 Stunden stehen gelassen. Danach werden erneut 30 mg Malonsäuredichlorid und danach 50 mg Inositol zugegeben und erneut bei 60°C über 2 Stunden stehen gelassen. Dieser Vorgang wird noch zweimal wiederholt. Die Trägerplatte wird danach vorsichtig mit Wasser gewaschen und gefriergetrocknet.

## Patentansprüche

1. Verknüpfungsprodukt (I) aus
m Molekülen eines Polysaccharids X mit einem Polysaccharid A,
wobei das Polysaccharid A aus der Gruppe der Chitine oder Chitosane ausgewählt ist,
m eine ganze Zahl zwischen 1 und 10.000 ist und
die Verknüpfung zwischen X und A eine Amin- und/oder Amidbindung ist, **dadurch gekennzeichnet, dass** das Polysaccharid X teilweise oder vollständig substituiert ist, wobei die Substituenten des Polysaccharids X ausgewählt sind aus der Gruppe bestehend aus Hydroxyethylgruppen und Carboxymethylgruppen und wobei der Polysaccharid X Stärke, Amylose und/oder Amylopektin ist.

2. Verknüpfungsprodukt nach Anspruch 1, **dadurch gekennzeichnet, dass** das Polysaccharid X eine Hydroxyethylstärke ist.

3. Verknüpfungsprodukt gemäß Anspruch 2, **dadurch gekennzeichnet,**
- **dass** das Molekulargewicht der Hydroxyethylstärke unterhalb 30.000 liegt, ihr Substitutionsgrad DS kleiner oder gleich 0,3 ist und m bevorzugt zwischen 15 und 50 liegt oder
- **dass** das Molekulargewicht der Hydroxyethylstärke unterhalb 4.000 und m bevorzugt zwischen 100 und 200 liegt oder
- **dass** das Molekulargewicht der Hydroxyethylstärke unterhalb 1.500 und m bevorzugt zwischen 300 und 750 liegt.

4. Verknüpfungsprodukt nach einem oder mehreren der vorstehenden Ansprüche, **dadurch gekennzeichnet, dass** das Polysaccharid A ein Chitosan mit einem Deacetylierungsgrad im Bereich von 90 % bis 40 %, bevorzugter von 75 % bis 60 % ist.

5. Verknüpfungsprodukt nach einem oder mehreren der vorstehenden Ansprüche, **dadurch gekennzeichnet, dass** das Verknüpfungsprodukt (I) substituiert ist,
indem Reste der Formel (II) kovalent an X gebunden sind
-Z1_{c}R1 (II)
und/oder indem Reste der Formel (III) kovalent an A gebunden sind
-Z2_{d}R2 (III),
wobei
R1 ein pharmazeutisch wirksamer Molekülrest ist,
R2 ein pharmazeutisch wirksamer Molekülrest ist, und
R1 und R2 gleich oder verschieden sein können, und
wobei
Z1 ein Linker ist, der sowohl an R1 als auch an X kovalent gebunden ist,
Z2 ein Linker ist, der sowohl an R2 als auch an A kovalent gebunden ist,
c = 1 oder 0 ist,
d = 1 oder 0 ist, und
wobei
das molare Verhältnis des Restes der Formel (II) zu X a ist,
das molare Verhältnis des Restes der Formel (III) zu A b ist,
a eine ganze Zahl zwischen 0 und 1000,
b eine ganze Zahl zwischen 0 und 1000 ist, und
wenigstens a oder b von Null verschieden ist.

6. Verknüpfungsprodukt gemäß Anspruch 5, **dadurch gekennzeichnet, dass** die Ausgangsverbindungen für den Linker Z1 und/oder Z2 ausgewählt sind aus linearen oder verzweigten, gesättigten oder ungesättigten, aliphatischen oder alicyclischen Kohlenwasserstoffresten mit 1 bis 22, vorzugsweise 2 bis 15, besonders bevorzugt 3 bis 8 Kohlenstoffatomen; Aryl-, Aryl-C₁-C₄-Alkyl- und Aryl-C₂-C₆-Alkenylgruppen mit 5 bis 12, vorzugsweise 6 bis 12, besonders bevorzugt 6 Kohlenstoffatomen im Arylrest, die gegebenenfalls mit C₁-C₆-Alkyl- und/oder C₂-C₆-Alkoxygruppen substituiert sein können; oder Heteroaryl-, Heteroaryl-C₁-C₄-Alkyl- und Heteroaryl-C₂-C₆-Alkenylgruppen mit 3 bis 8 Kohlenstoffatomen im Heteroarylrest und einem oder zwei Heteroatom(en), ausgewählt aus N, O und S, die mit C₁-C₆-Alkyl- und/oder C₂-C₆-Alkoxygruppen substituiert sein können, und
wobei die Ausgangsverbindungen für den Linker Z1 2 bis 20 funktionelle Gruppen zur Bildung der kovalenten Bindungen mit R1 und X enthält, und wobei die Ausgangsverbindungen für den Linker Z2 2 bis 20 funktionelle Gruppen zur Bildung der kovalenten Bindungen mit R2 und A enthält,
wobei die funktionellen Gruppen jeweils unabhängig voneinander ausgewählt sind aus
Hydroxyl- (-OH),
Amino- (-NH₂),
Carboxyl- (-COOH),
Isocyanat- (-NCO),
Carbonsäurehalogenid- (-C(O)CI, -C(O)Br und/oder -C(O)I),
Carboxylalkylen- (-(CH₂)_{q}-COOH, mit q = 1-10) oder
Ester-Gruppen (-COOAlk, wobei Alk eine Alkylgruppe mit ein bis sieben Kohlenstoffatomen ist), wobei bevorzugt
- R2 und/oder R1 gewählt ist aus der Gruppe bestehend aus Aminosäureresten und Peptidresten oder
- R2 und/oder R1 ein Proteinrest ist oder
- R2 und/oder R1 auf einem Arzneistoff basiert, der ausgewählt ist aus der Gruppe, bestehend aus Abmagerungsmittel, Appetitzügler, Acidosetherapeutika, Aminosäuren oder modifizierten Aminosäuren, Analeptika, Antihypoxämika, Analgetika, Antirheumatika, Anthelminthika, Antiallergika, Antianämika, Antiarrhythmika, Antibiotika, Antiinfektiva, Antidementiva, Antidiabetika, Antidota, Antiemetika, Antivertiginosa, Antiepileptika, Antihämorrhagika, Antihypertonika, Antihypoglykämika, Antihypotonika, Antikoagulantia, Antimykotika, Antiparasitäre Mittel, Antiphlogistika, Antitussiva, Expektorantia, Arteriosklerosemittel, Balneotherapeutika und Mittel zur Wärmetherapie, Betarezeptoren-, Calciumkanalblocker und Hemmstoffe des Renin-Angiotensin-Systems, Broncholytika, Antiasthmatika, Cholagoga und Gallenwegstherapeutika, Cholinergika, Corticoide, Dermatika, Diätetika, Ernährungstherapeutika, Diagnostika und Mittel zur Diagnosevorbereitung, Diuretika, durchblutungsfördernde Mittel, Entwöhnungsmittel, Enzyminhibitoren, Enzympräparate und Transportproteine, Fibrinolytika, Geriatrika, Gichtmittel, Grippemittel, Gynäkologika, Hämorrhoidenmittel, Hepatika, Hypnotika, Sedativa, Hypophysen-, Hypothalamushormone, regulatorische Peptide und ihre Hemmstoffe, Immuntherapeutika und Zytokine, Infusions- und Standardinjektionslösungen, Organperfusionslösungen, Kardiaka, Karies-, Parodontosemittel und andere Dentalpräparate, Koronarmittel, Laxantia, Lipidsenker, Neuraltherapeutika, Magen-Darm-Mittel, Migränemittel, Mineralstoffpräparate, Muskelrelaxantia, Narkosemittel, Nebenschilddrüsenhormone, Calciumstoffwechselregulatoren, Osteoporosemittel, Neuropathiepräparate und andere neurotrope Mittel, Neurotransmitter oder modifizierte Neurotransmitter, Ophthalmika, Otologika, Parkinsonmittel und andere Mittel gegen extrapyramidale Störungen, Psychopharmaka, Sinusitismittel, Roborantia, Tonika, Schilddrüsentherapeutika, Sera, Immunglobuline und Impfstoffe, Sexualhormone und ihre Hemmstoffe, Spasmolytika, Thrombozytenaggregationshemmer, Tuberkulosemittel, Umstimmungsmittel, Urologika, Venentherapeutika, Vitamine, Wundbehandlungsmittel, Zytostatika und Metastasenhemmer.

7. Verknüpfungsprodukt gemäß einem der Ansprüche 1 bis 6, **dadurch gekennzeichnet, dass** ein Arzneistoff R3 koordinativ an das Verknüpfungsprodukt (I) gebunden ist, wobei R3 bevorzugt ein Metallion, besonders bevorzugt Eisen, Kalium, Magnesium, Zink, Calcium, Gadolinium und/oder Kupfer ist.

8. Verfahren zur Herstellung eines Verknüpfungsprodukts gemäß einem der Ansprüche 1 bis 7, wobei
für den Fall, dass
(a) die Verknüpfung eine Aminbindung ist, das Verfahren die folgenden Schritte umfasst:
(i) Umsetzung des Polysaccharids A mit dem Polysaccharid X unter Bildung eines Imins, und
(ii) anschließende Reduktion des Imins zum Amin, oder
für den Fall, dass
(b) die Verknüpfung eine Amidbindung ist, das Verfahren die folgenden Schritte umfasst:
(i') Oxidation der Aldehydgruppe des Polysaccharids X, und
(ii') anschließende Umsetzung des Oxidationsprodukts mit dem Polysaccharid A,
unter Verwendung einer Vorrichtung (10), umfassend eine elektrostatisch aufladbare Trägerplatte (1) aus einem isolierenden Material, **dadurch gekennzeichnet, dass** das Verfahren die folgenden Schritte umfasst:
(α) Aufbringen einer Lösung oder Suspension von Chitosan oder Chitin A auf die Trägerplatte (1);
(β) Elektrostatische Aufladung der Trägerplatte (1), um ein elektrisches Feld auszubilden;
(γ) Herstellen eines Chitosan- bzw. Chitinfilms;
(5) Umsetzen des Chitosans oder Chitins A durch In-Kontakt-bringen des Chitosan- oder Chitinfilms mit einer Lösung oder Suspension des Polysaccharids X bei einem pH-Wert größer als 6,8 unter Bildung einer Schiffschen Base;
(ε) Reduktion der Schiffschen Base durch Zugeben eines Reduktionsmittels, wodurch das Verknüpfungsprodukt (I) erhalten wird,
wobei das Verfahren vorzugsweise weiter umfasst:
(ζ) Umsetzen des Verknüpfungsprodukts (I) mit R1 und optional Z1 und/oder mit R2 und optional Z2, wodurch das mit Resten der Formel (II) und/oder (III) substituierte Verknüpfungsprodukt (I) erhalten wird;
(η) optional Umsetzen des wenigstens mit Resten der Formel (II) substituierten Verknüpfungsprodukts (I) unter Spaltung der Aminbindung und/oder Amidbindung zwischen A und X, wodurch wenigstens das mit Resten der Formel (II) substituierte Polysaccharid X erhalten wird,
wobei die Vorrichtung (10) weiter optional eine Pipettier- und/oder Dosiereinrichtung (4) umfasst, die oberhalb der Trägerplatte (1) angeordnet ist, deren Abstand zur Trägerplatte (1) optional variabel einstellbar ist und deren Position über der Trägerplatte optional veränderbar ist.

9. Verfahren gemäß Anspruch 8, **dadurch gekennzeichnet, dass** die Trägerplatte (1) rotierbar ist, wobei die Vorrichtung (10) weiter optional eine Einrichtung (3) zur Erzeugung unterschiedlicher Ladungen und ihrer Messung auf der Oberfläche der Trägerplatte (1) umfasst, wobei die Einrichtung (3) eine Kathode, die mit dem Mittelpunkt der rotierbaren Trägerplatte (1) elektrisch leitend verbunden ist, sowie eine ringförmige Anode auf einem äußeren Kreis der Oberfläche der Trägerplatte (1) umfasst, wobei die Elektroden an einen Stromgenerator angeschlossen sind.

10. Verfahren gemäß einem der Ansprüche 8 und 9, wobei die Vorrichtung (10) weiter eine Einrichtung (2) zur Erzeugung und Messung einer elektrostatischen Ladung der Oberfläche der Trägerplatte (1) umfasst, die fähig ist, Ober- und Unterseite der rotierbaren Trägerplatte (1) unterschiedlich elektrostatisch aufzuladen.

11. Verfahren gemäß einem der Ansprüche 8 bis 10, **dadurch gekennzeichnet,**
- **dass** die Vorrichtung (10) weiter wenigstens eine Einrichtung (6) zur Durchleuchtung der Trägerplatte (1) sowie Lichtdetektoren zur Messung des durch die Trägerplatte (1) durchfallenden Lichts eine Einrichtung zur Beleuchtung der Oberfläche der Trägerplatte (1) sowie Lichtdetektoren zur Messung des durch die Trägerplatte (1) reflektierten Lichts und/oder eine Einrichtung zur Magnetisierung der gebildeten Filme auf der Oberseite der Trägerplatte (1) sowie zur Messung der Magnetfelder auf der Oberseite der Trägerplatte (1) umfasst und/oder
- **dass** Elektroden in oder auf der Oberfläche der Trägerplatte (1) angeordnet sind, die geeignet sind, die Trägerplatte (1) mit wählbarer Polarität und Ladungsverteilung elektrostatisch aufzuladen, und/oder
- **dass** über dem Mittelpunkt der Trägerplatte (1) in einem wählbaren Abstand eine Elektrode (9) angeordnet ist.

12. Verfahren gemäß einem der Ansprüche 8 bis 11, **dadurch gekennzeichnet, dass** in einem dem Schritt (i) oder (i') vorgelagerten Schritt das Polysaccharid X parallel angelagerte Molekülverbände mit Makromolekülen, bevorzugt kappa-Carrageen, Glycoproteinen oder Makromolekülen aus Zellmembranen, bildet, wobei die Makromoleküle keine funktionellen Gruppen aufweisen, die sie unter den Reaktionsbedingungen der folgenden Schritte zu einer Reaktion mit dem Polysaccharid X und/oder Polysaccharid A unter Bildung einer kovalenten Bindung befähigt.

13. Verfahren gemäß einem der Ansprüche 8 bis 12, **dadurch gekennzeichnet, dass** die Reaktionsprodukte, Ausgangsstoffe und Zwischenprodukte durch Elektrophorese und/oder Gelpermeations-Chromatographie voneinander abgetrennt und entsprechend ihrer elektrophoretischen Mobilität und/oder ihrem hydrodynamischen Volumen gereinigt werden und optional, dass nach der Substitution von X mit einem Rest der Formel (II) X und A in einem weiteren Schritt (v) voneinander getrennt werden.

14. Pharmazeutische Zusammensetzung, umfassend das Verknüpfungsprodukt gemäß irgendeinem der Ansprüche 1 bis 7.

15. Verwendung des Verknüpfungsprodukts gemäß irgendeinem der Ansprüche 1 bis 7 als biokompatibles Material, bevorzugt in Implantaten oder als solche, wie künstliche Blutgefäße, Gefäßimplantate, künstliche Herzklappen, Herzmitralklappen, Sehnen und Bänderersatz, Knorpelersatz, Patches zum Verschließen unerwünschter Öffnungen bei chirurgischen Eingriffen und Wundabdeckungen; in chirurgischen Hilfsmitteln oder als solche, wie chirurgische Werkzeuge, Einwegartikeln, die nur kurzzeitig intrakorporal eingesetzt werden, Katheter, Katheterschläuche, Nahtmaterial, bioabbaubares Nahtmaterial, Spritzen, extrakorporale Blutschläuche, Blutbeutel oder Beutel für Lösungen für intravenöse Anwendungen und Beutelfolien; oder in Komponenten in medizinischen Geräten oder als solche, wie Teile von Herz-, Lungen- und Dialyse-Maschinen oder Filtern, Infusionsschläuche, Schlauchpumpen und Dialysemembranen, oder als Material für Kontaktlinsen, als Kosmetikzusatz für Haarconditioner, Feuchtigkeitscreme oder Nagellack, zur Immobilisierung von Zellen und Enzymen, als Träger für Affinitätschromatographie und Proteintrennung, für kontrollierte therapeutische Systeme, für Systeme zur gezielten Wirkstofffreisetzung oder zum Einsatz bei Technologien für Gewebekulturen in vitro.

## Claims

1. A bonding product (I) consisting of
m molecules of a polysaccharide X with a polysaccharide A,
wherein said polysaccharide A is selected from the group of chitins or chitosans,
m is an integer of from 1 to 10,000, and
the linkage between X and A is an amine and/or amide linkage, **characterized in that** said polysaccharide X is partially or completely substituted, wherein the substituents of polysaccharide X are selected from the group consisting of hydroxyethyl groups and carboxymethyl groups and wherein said polysaccharide X is starch, amylose and/or amylopectin.

2. The bonding product according to claim 1, **characterized in that** said polysaccharide X is a hydroxyethyl starch.

3. The bonding product according to claim 2, **characterized in that**
- the molecular weight of said hydroxyethyl starch is below 30,000, its degree of substitution DS is smaller than or equal to 0.3, and m is preferably from 15 to 50; or
- the molecular weight of said hydroxyethyl starch is below 4000, and m is preferably from 100 to 200; or
- the molecular weight of said hydroxyethyl starch is below 1500, and m is preferably from 300 to 750.

4. The bonding product according to one or more of the preceding claims, **characterized in that** said polysaccharide A is a chitosan having a degree of deacetylation within a range of from 90% to 40%, more preferably from 75% to 60%.

5. The bonding product according to one or more of the preceding claims, **characterized in that** said bonding product (I) is substituted by having residues of formula (II) covalently bound to X
-Z1_{c}R1 (II)
and/or by having residues of formula (III) covalently bound to A
-Z2_{d}R2 (III),
wherein
R1 is a pharmaceutically active molecular residue,
R2 is a pharmaceutically active molecular residue, and
R1 and R2 may be the same or different, and
wherein
Z1 is a linker that is covalently bound to both R1 and X,
Z2 is a linker that is covalently bound to both R2 and A,
c = 1 or 0,
d = 1 or 0, and
wherein
the molar ratio of the residue of formula (II) to X is a,
the molar ratio of the residue of formula (III) to A is b,
a is an integer of from 0 to 1000,
b is an integer of from 0 to 1000, and
at least one of a and b is not zero.

6. The bonding product according to claim 5, **characterized in that** the starting compounds for linkers Z1 and/or Z2 are selected from linear or branched, saturated or unsaturated, aliphatic or alicyclic hydrocarbyl residues with from 1 to 22, preferably from 2 to 15, more preferably from 3 to 8, carbon atoms; aryl, aryl-C₁-C₄-alkyl and aryl-C₂-C₆-alkenyl groups with from 5 to 12, preferably from 6 to 12, more preferably 6, carbon atoms in the aryl residue, which may optionally be substituted with C₁-C₆-alkyl and/or C₂-C₆-alkoxy groups; or heteroaryl, heteroaryl-C₁-C₄-alkyl and heteroaryl-C₂-C₆-alkenyl groups with from 3 to 8 carbon atoms in the heteroaryl residue and one or two heteroatoms selected from N, O and S, which may be substituted with C₁-C₆-alkyl and/or C₂-C₆-alkoxy groups; and
wherein the starting compounds for the linker Z1 contain from 2 to 20 functional groups for forming the covalent bonds with R1 and X, and wherein the starting compounds for the linker Z2 contain from 2 to 20 functional groups for forming the covalent bonds with R2 and A,
wherein said functional groups are in each case independently selected from:
hydroxy (-OH),
amino (-NH₂),
carboxy (-COOH),
isocyanate (-NCO),
carboxylic acid halide (-C(O)CI, -C(O)Br and/or -C(O)I),
carboxyalkylene (-(CH₂)_{q}-COOH, with q = 1-10), or
ester groups (-COOAlk, wherein Alk is an alkyl group with from one to seven carbon atoms), wherein preferably
- R2 and/or R1 is selected from the group consisting of amino acid residues and peptide residues; or
- R2 and/or R1 is a protein residue; or
- R2 and/or R1 is based on a medicament selected from the group consisting of weight loss agents, anorexiants, anti-acidosis agents, amino acids or modified amino acids, analeptic/antihypoxemic agents, analgetics/antirheumatics, anthelmintics, antiallergic agents, anti-anemic agents, anti-arrhythmic agents, antibiot-ics/anti-infectives, antidementives, antidiabetics, antidotes, antiemetics/ antivertiginosa, antiepileptic agents, antihemorrhagic agents, anti-hypertensives, antihypoglycemic agents, antihypotonic agents, anticoagulants, antimycotic agents, antiparasitary agents, antiphlogistics, antitussives/expectorants, arteriosclerosis agents, balneotherapeutics and agents for thermotherapy, beta receptors, calcium channel blockers and inhibitors of the renin-angiotensin system, broncholytics/ antiasthmatics, cholagogues, and bile tract therapeutics, cholinergic agents, corticoids, dermatological agents, dietetic agents/nutrition therapeutics, diagnostic agents and adjuvants for diagnostics, diuretics, blood flow stimulants, withdrawal agents, enzyme inhibitors, enzyme preparations and transport proteins, fibrinolytics, geriatrics, gout remedies, influenza remedies, gynecological agents, antihemorrhoidal agents, hepatic agents, hypnotics/sedatives, pituitary and hypothalamic hormones, regulatory peptides and their inhibitors, immunotherapeutics and cyto-kines, infusion and standard injection solutions, organ perfusion solutions, cardiac remedies, caries and parodontose remedies and other dental preparations, coronary agents, laxatives, lipid de-pressors, neural therapeutics, gastro-intestinal agents, migraine analgesics, mineral metabolism preparations, muscle relaxants, narcotics, parathyroid hormones, calcium metabolic regulators, osteoporosis agents, neuropathy preparations and other neurotropic agents, neurotransmitters or modified neurotransmitters, ophthalmic agents, otological agents, anti-Parkinson drugs and other agents against extrapyramidal disorders, psychotropic drugs, sinusitis agents, roborants/tonics, thyroid therapeutic agents, sera, immunoglobulins and vaccines, sexual hormones and their inhibitors, spasmolytic agents, platelet-aggregation inhibitors, antituberculosis drugs, immunostimulants, urological agents, vein therapeutics, vitamins, wound treating agents, cytostatic agents and metastasis inhibitors.

7. The bonding product according to any of claims 1 to 6, **characterized in that** a medicinal substance R3 is coordinatively bound to the bonding product (I), wherein R3 is preferably a metal ion, more preferably iron, potassium, magnesium, zinc, calcium, gadolinium and/or copper.

8. A process for preparing a bonding product according to any of claims 1 to 7, **characterized in that**:
in the case where:
(a) the bonding is an amine linkage, the process comprises the following steps:
(i) reacting the polysaccharide A with polysaccharide X to form an imine; and
(ii) subsequently reducing the imine to the corresponding amine; or
in the case where:
(b) the bonding is an amide linkage, the process comprises the following steps:
(i') oxidizing the aldehyde group of polysaccharide X; and
(ii') subsequently reacting the oxidation product with polysaccharide A;
using a device (10) comprising an electrostatically chargeable support plate (1) made of an insulating material, **characterized in that** said process comprises the following steps:
(α) applying a solution or suspension of chitosan or chitin A to the support plate (1);
(β) electrostatically charging the support plate (1) to form an electric field;
(γ) preparing a chitosan or chitin film;
(δ) reacting the chitosan or chitin A by contacting the chitosan or chitin film with a solution or suspension of polysaccharide X at a pH of greater than 6.8 to form a Schiff base;
(ε) reducing the Schiff base by adding a reducing agent to obtain the bonding product (I);
wherein said process preferably further includes:
(ζ) reacting the bonding product (I) with R1 and optionally Z1 and/or with R2 and optionally Z2 to obtain the bonding product (I) substituted with residues of formula (II) and/or (III);
(η) optionally reacting the bonding product (I) substituted with at least residues of formula (II) to cleave the amine linkage and/or amide linkage between A and X to obtain at least polysaccharide X substituted with residues of formula (II);
wherein the device (10) further optionally comprises a pipetting and/or dosing means (4) provided above the support plate (1), whose distance to the support plate (1) can optionally be adjusted variably and whose position above the support plate can optionally be changed.

9. The process according claim 8, **characterized in that** said support plate (1) is rotatable, wherein the device (10) further optionally comprises a means (3) for generating different charges and measuring them on the surface of the support plate (1), which means (3) comprises a cathode that is connected in an electrically conductive way with the center of said rotatable support plate (1), and an annular anode on a circumference of the surface of the support plate (1), wherein said electrodes are connected to a power generator.

10. The process according to either of claims 8 and 9, wherein the device (10) further comprises a means (2) for generating and measuring an electrostatic charge of the surface of the support plate (1), which is capable of charging the top and bottom sides of said rotable support plate (1) with different electrostatic charges.

11. The process according to any of claims 8 to 10, **characterized in that**
- the device (10) further comprises at least one means (6) for transilluminating the support plate (1) as well as light detectors for measuring the light passing through the support plate (1), a means for illuminating the surface of the support plate (1) as well as light detectors for measuring the light reflected by the support plate (1), and/or a means for magnetizing the films formed on the surface of the support plate (1) and for measuring the magnetic fields on the surface of the support plate (1); and/or
- electrodes are arranged in or on the surface of the support plate (1) that are suitable for charging the support plate (1) electrostatically with selectable polarity and charge distribution; and/or
- an electrode (9) is arranged above the center of the support plate (1) at a selectable distance.

12. The process according to any of claims 8 to 11, **characterized in that** in a step upstream to step (i) or (i'), the polysaccharide X forms aggregates of parallel molecules with macromolecules, preferably kappa-carrageenan, glycoproteins or macromolecules from cell membranes, said macromolecules lacking functional groups that would enable them to react with polysaccharide X and/or polysaccharide A to form a covalent bond under the reaction conditions of the following process steps.

13. The process according to any of claims 8 to 12, **characterized in that** the reaction products, starting materials and intermediates are separated from one another by electrophoresis and/or gel permeation chromatography and purified in accordance with their electrophoretic mobility and/or their hydrodynamic volume, and, optionally, that after the substitution of X with a residue of formula (II), X and A are separated from one another in a further step (v).

14. A pharmaceutical composition comprising the bonding product according to any of claims 1 to 7.

15. Use of the bonding product according to any of claims 1 to 7 as a biocompatible material, preferably in or as implants, such as artificial blood vessels, vascular implants, artificial heart valves, heart mitral valves, tendons and ligament substitutes, cartilage substitutes, patches for closing undesirable openings during surgical interventions and wound covers; in or as surgical adjuvants, such as surgical tools, disposable articles that are employed intracorporeally on a short-term basis, catheters, catheter tubes, suture material, biodegradable suture material, syringes, extracorporeal blood tubes, blood bags or bags for solutions for intravenous applications, and bag sheets; or in or as components in medical devices, such as parts of heart-lung and dialysis machines or filters, infusion tubes, peristaltic pumps and dialysis membranes, or as a material for contact lenses, as a cosmetic additive for hair conditioners, moisturizing cream or nail polish, for the immobilization of cells and enzymes, as carriers for affinity chromatography and protein separation, for controlled therapeutical systems, for systems for selective drug release or for use in technologies for tissue cultures in vitro.

## Revendications

1. Produit de liaison (I) composé
de m molécules d'un polysaccharide X comprenant un polysaccharide A,
le polysaccharide A étant choisi parmi le groupe des chitines ou des chitosans,
m étant un nombre entier compris entre 1 et 10 000, et
la liaison entre X et A étant une liaison amine et/ou amide,
**caractérisé en ce que** le polysaccharide X est substitué en partie ou en totalité, les substituants du polysaccharide X étant choisis parmi le groupe constitué de groupes hydroxyéthyles et de groupes carboxyméthyles et le polysaccharide X étant de l'amidon, de l'amylose et/ou de l'amylopectine.

2. Produit de liaison selon la revendication 1, **caractérisé en ce que** le polysaccharide X est un amidon hydroxyéthylé.

3. Produit de liaison selon la revendication 2, **caractérisé en ce**
- **que** le poids moléculaire de l'amidon hydroxyéthylé est inférieur à 30 000, en ce que son degré de substitution DS est inférieur ou égal à 0,3 et en ce que m est compris de manière préférée entre 15 et 50, ou
- en ce que le poids moléculaire de l'amidon hydroxyéthylé est inférieur à 4 000 et en ce que m est compris de manière préférée entre 100 et 200, ou
- en ce que le poids moléculaire de l'amidon hydroxyéthylé est inférieur à 1 500 et en ce que m est compris de manière préférée entre 300 et 750.

4. Produit de liaison selon l'une quelconque ou plusieurs des revendications précédentes, **caractérisé en ce que** le polysaccharide A est un chitosan présentant un degré de désacétylation compris dans la plage allant de 90 % à 40 %, de manière plus préférée de 75 % à 60 %.

5. Produit de liaison selon l'une quelconque ou plusieurs des revendications précédentes, **caractérisé en ce que** le produit de liaison (I) est substitué,
**en ce que** des radicaux de la formule (II) sont liés de manière covalente à X
-Z1_{c}R1 (II)
et/ou **en ce que** des radicaux de la formule (III) sont liés de manière covalente à A
- Z2_{d}R2 (III),
R1 étant un radical de molécule pharmaceutiquement actif,
R2 étant un radical de molécule pharmaceutiquement actif, et
R1 et R2 pouvant être identiques ou différents, et
Z1 étant un élément de liaison, qui est lié de manière covalente aussi bien à R1 qu'à X,
Z2 étant un élément de liaison, qui est lié de manière covalente aussi bien à R2 qu'à A,
c = 1 ou 0, et
d = 1 ou 2, et
le rapport moléculaire entre le radical de la formule (II) et X étant a,
le rapport moléculaire entre le radical de la formule (III) et A étant b,
a étant un nombre entier compris entre 0 et 1 000,
b étant un nombre entier compris entre 0 et 1 000, et
au moins a et b étant différents de zéro.

6. Produit de liaison selon la revendication 5, **caractérisé en ce que** les liaisons de départ pour l'élément de liaison Z1 et/ou Z2 sont choisies parmi : des radicaux hydrocarbonés linéaires ou ramifiés, saturés ou insaturés, aliphatiques ou alicycliques comprenant 1 à 22 atomes de carbone, de préférence 2 à 15 atomes de carbone, de manière particulièrement préférée 3 à 8 atomes de carbone ; des groupes aryle, aryle-C₁-C₄-alkyle et aryle-C₂-C₆-alcényle comprenant 5 à 12 atomes de carbone, de préférence 6 à 12 atomes de carbone, et de manière particulièrement préférée 6 atomes de carbone dans le radical aryle, qui peuvent le cas échéant être substitués par des groupes alkyle en C₁-C₆ et/ou des groupes alcoxy en C₂-C₆ ; ou des groupes hétéroaryle, hétéroaryle-C₁-C₄-alkyle et hétéroaryle-C₂-C₆-alcényle comprenant 3 à 8 atomes de carbone dans le radical hétéroaryle et un ou deux hétéroatomes, choisis parmi N, O et S, qui peuvent être substitués par des groupes alkyle en C₁-C₆ et/ou des groupes alcoxy en C₂-C₆, et
les liaisons de départ pour l'élément de liaison Z1 contenant 2 à 20 groupes fonctionnels servant à former les liaisons covalentes avec R1 et X, et
les liaisons de départ pour l'élément de liaison Z2 contenant 2 à 20 groupes fonctionnels servant à former les liaisons covalentes avec R2 et A,
les groupes fonctionnels étant choisis respectivement de manière indépendante les uns des autres parmi
hydroxyle-(-OH),
amino-(-NH₂),
carboxyle- (-COOH),
isocyanate- (-NCO),
halogénure d'acide carboxylique-(-C(O)Cl, -C(O)Br et/ou -C(O)I), carboxyalkylène- (-(CH₂)_{q}-COOH, avec q = 1 - 10) ou
groupes ester (-COOAlk, Alk étant un groupe alkyle comprenant 1 à 7 atomes de carbone),
de manière préférée
- R2 et/ou R1 étant choisis parmi le groupe constitué des esters d'acides aminés et des radicaux peptidiques ou
- R2 et/ou R1 étant un radical protéique ou
- R2 et/ou R1 étant basés sur un médicament qui est choisi parmi le groupe constitué de produits amaigrissants, de produits coupe-faim, de produits contre l'acidose, d'acides aminés ou d'acides aminés modifiés, d'analeptiques, de produits contre l'hypoxémie, d'analgésiques, de produits antirhumatismaux, de produits anthelmintiques, de produits antiallergiques, de produits contre l'anémie, de produits antiarythmiques, d'antibiotiques, de produits antiinfectieux, de produits pour le traitement des démences, de produits antidiabétiques, de produits antidotes, de produits antiémétiques, de produits contre les vertiges, de produits antiépileptiques, de produits antihémorragiques, de produits antihypertonie, de produits contre l'hypoglycémie, de produits contre l'hypotonie, de produits anticoagulants, de produits antifongiques, de produits contre les parasites, de produits antiphlogistiques, de produits antitussifs, de produits expectorants, de produits contre l'artériosclérose, de produits de balnéothérapie et de produits de traitement par la chaleur, de bêta-bloquants, de bloqueurs des canaux calciques et d'inhibiteurs du système rénine-angiotensine, de produits contre la bronchite, de produits antiasthmatiques, de substances cholagogues et de produits de traitement des voies biliaires, de produits cholinergiques, de corticoïdes, de produits de dermatologie, de produits diététiques, de produits de thérapie alimentaire, de produits de diagnostic et de produits servant à préparer des diagnostics, de diurétiques, de produits de stimulation de la circulation sanguine, de produits pour lutter contre les dépendances, d'inhibiteurs d'enzymes, de préparations enzymatiques et de protéines de transport, de fibrinolytiques, de produits utilisés en gériatrie, de produits de traitement de la goutte, de produits contre la grippe, de produits utilisés en gynécologie, d'antihémorroïdaires, de produits antihépatiques, de somnifères, de sédatifs, d'hormones d'hypophyse, d'hypothalamus, de peptides de régulation et ses inhibiteurs, de produits de traitement immunologique et des cytokines, de solutions d'infusion et d'injection standard, de solutions de perfusion d'organe, de produits contre les maladies du coeur, de produits anticarries et contre la parodontose et d'autres préparations dentaires, de produits utilisés dans le cadre de thérapies coronaires, de laxatifs, de produits hypolipémiants, de produits utilisés dans le cadre d'une thérapie neurale, de produits de traitement des maladies gastro-intestinales, de produits contre les migraines, de préparations minérales, de décontractants musculaires, de produits anesthésiques, d'hormones de la glande parathyroïde, de régulateurs du métabolisme du calcium, de produits contre l'ostéoporose, de préparations de neuropathie et d'autres neurotropes, de neurotransmetteurs ou de neurotransmetteurs modifiés, de produits utilisés en ophtalmologie, de produits otologiques, de produits de traitement de parkinson et d'autres produits contre les troubles extrapyramidaux, de produits psychotropes, de produits de traitement de la sinusite, de produits roboratifs, de produits toniques, de produits de traitement de la thyroïde, de la séra, des immunglobulines et produits de vaccination, des hormones sexuelles et leurs inhibiteurs, des produits antispasmodiques, des inhibiteurs d'agrégation de thrombocytes, de produits de traitement de la tuberculose, d'anti-dépresseurs, de produits utilisés en urologie, de produits de traitement veineux, de vitamines, de produits de traitement des plaies, de cytostatiques et d'inhibiteurs de métastases.

7. Produit de liaison selon l'une quelconque des revendications 1 à 6, **caractérisé en ce qu'**un médicament R3 est lié de manière coordonnée au produit de liaison (I), R3 étant de manière préférée un ion métallique, de manière particulièrement préférée du fer, du potassium, du magnésium, du zinc, du calcium, de gadolinium et/ou du cuivre.

8. Procédé servant à fabriquer un produit de liaison selon l'une quelconque des revendications 1 à 7,
dans le cas où
(a) la liaison est une liaison amine, le procédé comprenant les étapes suivantes :
(i) la mise en réaction du polysaccharide A avec le polysaccharide X en formant une imine, et
(ii) la réduction qui suit immédiatement après de l'imine pour obtenir de l'amine, ou dans le cas où
(b) la liaison étant une liaison amide, le procédé comprenant les étapes suivantes :
(i') l'oxydation du groupe aldéhyde du polysaccharide X, et
(ii') la mise en réaction qui suit immédiatement après du produit de l'oxydation avec le polysaccharide A,
en utilisant un dispositif (10), comprenant une plaque de support (1) pouvant être chargée de manière électrostatique composée d'un matériau isolant, **caractérisé en ce que** le procédé comprend les étapes suivantes :
(α) l'application d'une solution ou d'une suspension de chitosan ou de chitine A sur la plaque de support (1) ;
(ß) la charge électrostatique de la plaque de support (1) afin de réaliser un champ électrique ;
(γ) la fabrication d'un film de chitosan ou d'un film de chitine ;
(δ) la mise en réaction du chitosan ou de la chitine A par mise en contact du film de chitosan ou de chitine avec une solution ou suspension du polysaccharide X à une valeur pH supérieure à 6,8 en formant une base de Schiff ;
(ε) la réduction de la base de Schiff par l'ajout d'un produit de réduction, ce qui permet d'obtenir le produit de liaison (I),
le procédé comprenant de préférence en outre les étapes suivantes :
(ζ) la mise en réaction du produit de liaison (I) avec R1 et en option Z1 et/ou avec R2 et en option Z2, ce qui permet d'obtenir le produit de liaison (I) substitué par des radicaux de la formule (II) et/ou (III) ;
(η) la mise en réaction en option du produit de liaison (I) au moins substitué par des radicaux de la formule (II) en scindant la liaison amine et/ou la liaison amide entre A et X, ce qui permet d'obtenir au moins le polysaccharide X substitué par des radicaux de la formule (II),
le dispositif (10) comprenant en outre, en option, un système de pipetage et/ou de dosage (4), qui est disposé au-dessus de la plaque de support (1), dont la distance par rapport à la plaque de support (1) peut être réglée en option de manière variable et dont la position au-dessus de la plaque de support peut être modifiée en option.

9. Procédé selon la revendication 8, **caractérisé en ce que** la plaque de support (1) peut tourner, le dispositif (10) comprenant en outre en option, un système (3) servant à produire des charges différentes et servant à leur mesure sur la surface de la plaque de support (1), le système (3) comprenant une cathode, qui est reliée de manière électroconductrice au point central de la plaque de support (1) pouvant tourner, ainsi qu'une anode annulaire sur un cercle extérieur de la surface de la plaque de support (1), les électrodes étant raccordées à un générateur de courant.

10. Procédé selon l'une quelconque des revendications 8 et 9, le dispositif (10) comprenant en outre un système (2) servant à produire et à mesurer une charge électrostatique de la surface de la plaque de support (1), qui est en mesure de charger le côté supérieur et le côté inférieur de la plaque de support (1) pouvant tourner électrostatiquement de manière différente.

11. Procédé selon l'une quelconque des revendications 8 à 10, **caractérisé en ce**
- **que** le dispositif (10) comprend en outre au moins un système (6) servant à éclairer la plaque de support (1) ainsi que des détecteurs de lumière servant à mesurer la lumière incidente traversant la plaque de support (1), un système servant à éclairer la surface de la plaque de support (1) ainsi que des détecteurs de lumière servant à mesurer la lumière réfléchie par la plaque de support (1) et/ou un système servant à magnétiser les films formés sur le côté supérieur de la plaque de support (1) et servant également à mesurer les champs magnétiques sur le côté supérieur de la plaque de support (1), et/ou
- en ce que des électrodes sont disposées dans ou sur la surface de la plaque de support (1), lesquelles sont adaptées pour charger de manière électrostatique la plaque de support (1) en une polarité pouvant être choisie et en une répartition de charge, et/ou
- en ce qu'une électrode (9) est disposée au-dessus du point central de la plaque de support (1) à une distance pouvant être choisie.

12. Procédé selon l'une quelconque des revendications 8 à 11, **caractérisé en ce que** lors d'une étape précédant l'étape (i) ou (i'), le polysaccharide X forme des assemblages de molécules déposés de manière parallèle comprenant des macromolécules, de manière préférée des carraghénanes kappa, des glycoprotéines ou comprenant des macromolécules composées de membranes cellulaires, les macromolécules ne présentant aucun groupe fonctionnel, qui leur permet, dans des conditions de réaction des étapes qui suivent, de procéder à une réaction avec le polysaccharide X et/ou le polysaccharide A en formant une liaison covalente.

13. Procédé selon l'une quelconque des revendications 8 à 12, **caractérisé en ce que** les produits de réaction, les substances de départ et les produits intermédiaires sont nettoyés par des électrophorèses et/ou par chromatographie par perméation de gel séparément les uns des autres et selon leur mobilité électrophorétique et/ou selon leur volume hydrodynamique, et en option **en ce que** X et A sont séparés l'un de l'autre lors d'une autre étape (v) après la substitution de X par un radical de la formule (II).

14. Composition pharmaceutique, comprenant le produit de liaison selon l'une quelconque des revendications 1 à 7.

15. Utilisation du produit de liaison selon l'une quelconque des revendications 1 à 7 en tant que matériau biocompatible, de manière préférée dans des implants ou similaires, tels que des vaisseaux sanguins artificiels, des implants vasculaires, des valvules cardiaques artificielles, des valvules mitrales cardiaques, des tendons et un substitut de ligament, un substitut du cartilage, des pastilles servant à fermer des orifices non souhaités lors d'interventions chirurgicales et des pansements de plaies ; dans des instruments chirurgicaux ou similaires, tels que des outils chirurgicaux, des articles à usage unique, qui ne peuvent être utilisés de manière intracorporelle que de manière limitée dans le temps, des cathéters, des flexibles de cathéter, du matériel de suture, du matériel de suture biodégradable, des aiguilles, des flexibles de sang extracorporels, des poches de sang ou des poches pour des solutions se destinant à des applications intraveineuses et des films de poche ; ou dans des composants dans des appareils médicaux ou similaires, tels que des parties de machines de battement de coeur, de respiration artificiels et de dialyse ou des filtres, des flexibles de perfusion, des pompes flexibles et des membranes de dialyse, ou en tant que matériau pour des lentilles de contact, en tant qu'additif cosmétique pour des shampoings, des crèmes hydratantes ou du vernis, servant à immobiliser des cellules et des enzymes, en tant que supports pour une chromatographie d'affinité et pour une séparation de protéines, pour des systèmes thérapeutiques contrôlés, pour des systèmes servant à libérer de manière ciblée des principes actifs ou aux fins de l'emploi dans des technologies pour des cultures tissulaires in vitro.
